# EUROPÄISCHE PATENTSCHRIFT

(11) **EP 3 765 872 B1**
(45) Veröffentlichungstag und Bekanntmachung des Hinweises auf die Patenterteilung: **28.10.2026**
(21) Anmeldenummer: 19712174.2
(22) Anmeldetag: 18.03.2019
(51) Int. Cl.: G02B 3/14, G01N 21/41, G02B 21/24, G02B 26/08, G02B 7/38, G02B 21/16, G02B 21/33, G02B 21/36, G02B 21/02, G02B 21/18, G02B 27/00

(54) **VERFAHREN UND VORRICHTUNG ZUM MANIPULIEREN EINES STRAHLENGANGES IN EINEM MIKROSKOP, VERFAHREN ZUR AUFNAHME VON BILDERSTAPELN IN EINEM MIKROSKOP**
METHOD AND DEVICE FOR MANIPULATING A BEAM PATH IN A MICROSCOPE, METHOD FOR RECORDING IMAGE STACKS IN A MICROSCOPE
PROCÉDÉ ET APPAREIL POUR MANIPULER UN TRAJET DE FAISCEAU DANS UN MICROSCOPE, PROCÉDÉ ET APPAREIL POUR ENREGISTRER DES PILES D'IMAGES DANS UN MICROSCOPE

(30) Priorität: 16.03.2018 DE 102018204097; 26.04.2018 DE 102018206486
(43) Veröffentlichungstag der Anmeldung: 20.01.2021
(73) Patentinhaber: Leica Microsystems CMS GmbH, 35578 Wetzlar (DE)
(72) Erfinder: FAHRBACH, Florian, 68167 Mannheim (DE)
(74) Vertreter: Schaumburg und Partner Patentanwälte mbB
(86) Internationale Anmeldenummer: PCT/EP2019/056731
(87) Internationale Veröffentlichungsnummer: WO 2019/175441

(56) Entgegenhaltungen:
- DE-A1- 102015 119 258
- JP-A- 2007 199 511
- US-A1- 2015 015 871

## Beschreibung

Die Erfindung betrifft ein Verfahren zum Manipulieren mindestens eines Strahlenganges in einem Mikroskop, insbesondere in einem Lichtblattmikroskop, ein Verfahren zur Aufnahme von Bilderstapeln in einem Mikroskop, insbesondere in einem Lichtblattmikroskop, eine Vorrichtung zur brechzahlabhängigen Manipulation mindestens eines Strahlenganges in einem Mikroskop, insbesondere in einem Lichtblattmikroskop, und ein nichtflüchtiges, computerlesbares Speichermedium.

Im Stand der Technik sind derzeit sogenannte Klärungsverfahren bekannt, welche es erlauben, Proben in einem Immersionsmedium aufzunehmen, wobei das Immersionsmedium bezüglich seines Brechungsindex an die zu untersuchende Probe angepasst werden kann oder der Brechungsindex der Probe homogenisiert werden kann. Letzteres Verfahren hat nicht zur Folge, dass der Brechungsindex der Probe auch an den des Mediums angepasst wird. Eine Vielzahl (mehr als 20) solcher Immersionsmedien, die alkohol- oder zuckerbasiert sein können, ist bekannt. Die Untersuchung lebendiger Proben ist mit diesem Verfahren nicht möglich, da die Proben massiv chemisch verändert wurden, z.B. durch das Entfernen von Fetten.

In der JP 2007 199 511 A1 ist ein scannendes konfokales Lasermikroskop zur 2D- oder 3D-Untersuchung einer Probe gezeigt, welches es erlaubt die Dicke oder Brechzahl einer zu messenden Probe einzugeben und anhand dieser Parameter aus einer Look-up-Tabelle Korrekturparameter auszulesen.

Die DE 10 2015 119 258 A1 offenbart ein Lichtmikroskop und ein Verfahren zum Bestimmen einer wellenlängenabhängigen Brechzahl eines Probenmediums, wobei der Brechungsindex direkt im Probenraum mit Probe ermittelt wird.

Die US 2015 / 015 871 A1_betrifft ein Mikroskopsystem und ein Verfahren zur Ermittlung der Brechzahl einer Probe basierend auf vorgenommenen Korrekturen von Aberrationen.

Auf der anderen Seite gibt es auch das Bestreben, lebende Zellen und Organismen in ein Medium zu betten, dessen Brechungsindex dem zu untersuchenden Objekt entspricht. Immersionsmedien können zusätzlich zu ihren unterschiedlichen Brechungsindices in unterschiedlichen Mischungsverhältnissen mit einem entsprechenden Lösungsmittel verwendet werden.

Daraus resultiert eine große Variation und insbesondere Ungewissheit über den Brechungsindex des gerade verwendeten Immersionsmediums.

Der Brechungsindex des Immersionsmediums ist jedoch maßgeblich für das Auftreten von Aberrationen, insbesondere einer Defokussierung und sphärischer Aberrationen verantwortlich. Diese vom Brechungsindex abhängigen Effekte können eine mikroskopische Aufnahme verschlechtern.

Wird zur Untersuchung einer Probe in einem Immersionsmedium ein sogenanntes Lichtblattmikroskop verwendet, so kann ein nicht berücksichtigter Brechungsindex dazu führen, dass eine Fokusebene einer Detektionsoptik aufgrund unterschiedlicher Brechung durch die Brechzahl des Immersionsmediums und/oder der Probe so weit verschoben wird, dass diese nicht mehr mit dem durch das Beleuchtungsobjektiv generierte Lichtblatt (d.h. eine zweidimensionale beleuchtete Ebene) übereinfällt. D.h., dass eine Defokussierung in einem Lichtblattmikroskop gravierende Qualitätseinbußen der aufgenommenen Bilder hervorrufen kann.

Im Stand der Technik sind aus diesem Grund iterative und bildbasierte Algorithmen bzw. auf diesen basierende Verfahren bekannt, welche ausgehend von der Bildqualität Änderungen mindestens eines Mikroskopparameters vornehmen und so in einem Näherungsverfahren mögliche auftretende Aberrationen kompensiert werden können.

In den Klärungsverfahren aus dem Stand der Technik werden präventiv bevorzugt Objektive mit geringer numerischer Apertur (NA) verwendet, da bei diesen niedrig-NA Objektiven die oben genannten Aberrationen vernachlässigbar sind. Auch bei konfokalen Mikroskopiemethoden, die beispielsweise ein einziges Objektiv benutzen, sodass sowohl ein Beleuchtungsstrahlengang, als auch ein Detektionsstrahlengang Aberrationen in dieselbe "Richtung", d.h. mit demselben Vorzeichen unterliegt, können die genannten Aberrationen vernachlässigbar sein. Allerdings ist es erwünscht, auch Objektive mit hoher NA verwenden zu können, um mit diesen eine höhere Auflösung zu erreichen und das von der Probe ausgehende Licht effizienter zu detektieren.

Aufgabe der vorliegenden Erfindung ist es somit, Proben in beliebigen Immersionsmedien zu betrachten und bei der Betrachtung Objektive mit hoher NA nutzen zu können.

Die obige Aufgabe wird durch den Anspruchsgegenstand der unabhängigen Ansprüche gelöst.

Bevorzugte Ausgestaltungen sind in den abhängigen Ansprüchen definiert.

Die obige Aufgabe wird durch das erfindungsgemäße Verfahren zum Manipulieren mindestens eines Strahlenganges gemäß Anspruch 1 gelöst.

Die erfindungsgemäßen Verfahren, die erfindungsgemäße Vorrichtung und das erfindungsgemäße nichtflüchtige, computerlesbare Speichermedium zum Ausführen der Verfahren haben somit den Vorteil, dass diese eine schnelle, probenschonende, deterministische und nichtiterative Manipulation mindestens eines Strahlenganges eines Mikroskops basierend auf dem Brechungsindex der Probe und/oder des Immersionsmediums ermöglichen.

Das erfindungsgemäße Verfahren, die erfindungsgemäße Vorrichtung und das erfindungsgemäße nicht flüchtige, computerlesbares Speichermedium können jeweils durch spezifische Ausgestaltungen weiter verbessert werden. Einzelne technische Merkmale der Ausgestaltungen der Erfindung können dabei beliebig miteinander kombiniert und/oder weggelassen werden, sofern es nicht auf den mit dem weggelassenen technischen Merkmal erzielten technischen Effekt ankommt.

Das erfindungsgemäße Verfahren kann zum beinahe beliebigen Manipulieren des mindestens einen Strahlenganges verwendet werden, kann allerdings auch insbesondere dazu dienen, mindestens einen durch die Probe und/oder das optische Medium eingeführten Abbildungsfehler zu kompensieren.

Gegenüber Lösungen aus dem Stand der Technik haben das oben genannte erfindungsgemäße Verfahren, die erfindungsgemäße Vorrichtung und das erfindungsgemäße Speichermedium den Vorteil, dass der Brechungsindex einer Probe und/oder des die Probe umgebenden Immersionsmedium automatisch gemessen werden kann und basierend auf dem gemessenen Brechungsindex, d.h. deterministisch, nicht auf iterativen Verfahren beruhend und insbesondere ohne die Aufnahme von Bildern quantitativ erhalten wird. Hierzu ist es nicht notwendig, dass eine Probe in einem Probenvolumen angeordnet ist, sodass das erfindungsgemäße Verfahren bzw. die erfindungsgemäße Vorrichtung probenschonend ist. Zudem sind die erfindungsgemäßen Verfahren berührungslos.

Als Immersionsmedium ist jenes Medium zu verstehen, welches sich in einem Probenvolumen und insbesondere eine Probe umgebend in diesem Probenvolumen befinden kann. Das Immersionsmedium kann sich ebenso im Bereich zwischen der Probe und einer vorderen Linse eines entsprechenden Objektivs befinden.

Der zu manipulierende Strahlengang, insbesondere eines Lichtblattmikroskops, kann beispielsweise ein Beleuchtungsstrahlengang und/oder ein Detektionsstrahlengang sein. Bevorzugt werden beide Strahlengänge für Beleuchtung und Detektion manipuliert, insbesondere können für den jeweiligen Strahlengang auftretende Aberrationen kompensiert werden.

Als optisches Medium ist ein Material zu verstehen, welches für die im Mikroskop verwendete Wellenlänge oder Wellenlängen transparent ist und welches eine für diese Wellenlänge charakteristische optische Eigenschaft wie Brechungsindex und Dispersion aufweist. Das optische Medium kann insbesondere und nicht einschränkend die oben genannten alkohol- oder zuckerbasierten Immersionsmedien, aber auch Wasser, Glycerin und Luft umfassen. Folglich ist das erfindungsgemäße Verfahren bzw. die erfindungsgemäße Vorrichtung auch ohne ein Immersionsmedium (die Objektive befinden sich in Luft) nutzbar.

Eine einfache Ausgestaltung des erfindungsgemäßen Verfahren kann dadurch erreicht werden, dass das Ermitteln des Brechungsindex der im Probenvolumen angeordneten Probe und/oder des im Probenvolumen angeordneten optischen Mediums den Verfahrensschritt des Eingebens der entsprechenden Werte durch einen Benutzer umfasst. In einer solchen Ausgestaltung kann der Nutzer beispielsweise den Brechungsindex aus einer Auswahlliste vorgegebener Immersionsmedien auswählen oder aber einen benutzerdefinierten Brechungsindex eingeben. So kann bei wiederholten Messungen mit einem vorab bereits genutzten und somit bekannten Immersionsmedium die Anpassung an eben dieses Immersionsmedium beschleunigt werden.

In einer weiteren Ausgestaltung kann das Verfahren zur Aufnahme von Bilderstapeln die folgenden Schritte umfassen: (8a) Verschieben einer Fokusebene einer ersten optischen Anordnung um einen voreingestellten Scanweg; (8b) Manipulieren des mindestens einen Strahlenganges der ersten optischen Anordnung gemäß einer Ausgestaltung des erfindungsgemäßen Verfahrens zum Manipulieren eines Strahlenganges in einem Mikroskop zum Korrigieren von Abbildungsfehlern der ersten optischen Anordnung; und (8c) Verschieben oder Nachführen der Fokusebene einer zweiten optischen Anordnung um einen, vom im Verfahrensschritt (8b) ermittelten Brechungsindex abhängigen Nachführweg.

In einer vorteilhaften Ausgestaltung des Verfahrens kann dieses das Aufnehmen und/oder Speichern eines Bildes zur Erzeugung des Bilderstapels umfassen. Insbesondere kann eine Anzahl n von Bildern aufgenommen und/oder gespeichert werden, welche den Bilderstapel ausbilden. Bevorzugt erfolgt die Aufnahme aller Bilder des Bilderstapels mit korrigierten Abbildungsfehlern, d.h. nach dem Manipulieren des jeweiligen Strahlenganges.

Das zuvor erwähnte Verfahren zur Aufnahme von Bildstapeln kann in einer weiteren Ausgestaltung dadurch verbessert werden, dass im Verfahrensschritt (8c) zusätzlich der Schritt des Manipulierens des mindestens einen Strahlenganges der zweiten optischen Anordnung gemäß einer Ausgestaltung des erfindungsgemäßen Verfahrens zum Manipulieren eines Strahlenganges in einem Mikroskop zum Korrigieren von Abbildungsfehlern der zweiten optischen Anordnung durchgeführt wird. Somit können in einem Mikroskop sowohl der Beleuchtungsstrahlengang, als auch der Detektionsstrahlengang an das unbekannte Medium, insbesondere an dessen Brechzahl angepasst werden.

In einer weiteren möglichen Ausgestaltung des erfindungsgemäßen Verfahrens zur Aufnahme von Bilderstapeln können die Verfahrensschritte (8a), (8b) und (8c) in abgeänderter Form wiederholt werden. So ist es möglich, dass im Verfahrensschritt (8b) des Manipulierens des mindestens einen Strahlenganges der ersten optischen Anordnung in einem zweiten Durchlauf der Verfahrensschritte (8a)-(8c) der Brechungsindex nicht von Neuem ermittelt wird. Somit kann ein abgeänderter Verfahrensschritt (8b)' lediglich den Verfahrensschritt des Einstellens mindestens eines Mikroskopparameters in Abhängigkeit vom ermittelten Brechungsindex zum Manipulieren des Strahlengangs aufweisen. Der Brechungsindex wurde in einem solchen Fall im ersten Durchlauf im Verfahrensschritt (8b) ermittelt. Dies hat den Vorteil, dass bei der Aufnahme von Bilderstapeln lediglich für die Aufnahme des ersten Bildes die Ermittlung des Brechungsindex erfolgt, wohingegen die Aufnahme weiterer Bilder des Bilderstapels keine weitere Ermittlung des Brechungsindex (der ja bereits ermittelt wurde) notwendig ist. Dies kann die Aufnahme von Bilderstapeln beschleunigen.

Nach dem Verfahrensschritt (8c) erfolgt bevorzugt n-mal die Aufnahme eines Bildes, wobei n die Gesamtzahl der Bilder des Bilderstapels darstellt.

Insbesondere können nach dem Durchführen der Verfahrensschritte (8a), (8b) und (8c) die Verfahrensschritte (8a), (8b)' und (8c) gemäß einer gewünschten Anzahl der Bilder des Bilderstapels beliebig oft (n-mal) wiederholt werden. Hierbei muss das Ermitteln des Brechungsindex nicht zwingend vor jeder Bildaufnahme wiederholt werden.

Allerdings können in einer weiteren Ausgestaltung des Verfahrens zur Aufnahme von Bilderstapeln jeweils die Verfahrensschritte (8a), (8b) und (8c) gemäß der vorab festgelegten Anzahl aufzunehmender Bilder beliebig oft durchgeführt werden, wobei jeweils nach dem Verfahrensschritt (8c) eine Bildaufnahme erfolgen kann. Diese Ausgestaltung des erfindungsgemäßen Verfahrens kann bevorzugt in Proben mit hohen (bzw. detektierbaren) Brechzahlgradienten verwendet werden. Somit könnten für jede aufgenommene Ebene etwaige Abbildungsfehler korrigiert werden.

Ist eine Brechzahländerung innerhalb des Volumens, welches den Bilderstapel einschließt, vernachlässigbar, so kann ein einmaliges Ermitteln des Brechungsindex im Verfahrensschritt (8b) das Verfahren beschleunigen, da das Ermitteln des Brechungsindex für jede weitere Bildaufnahme nicht wiederholt werden muss.

In einer weiteren Ausgestaltung des erfindungsgemäßen Verfahrens zur Aufnahme von Bilderstapeln kann vor der ersten Erfassung eines Bildes ein Brechungsindex erfasst werden, sobald ein Nutzer eine Probe in das Mikroskop eingebracht hat. Hierbei sind unterschiedliche Trigger denkbar, beispielsweise ein von einem Computer gestarteter Trigger, sobald ein neues Projekt vom Nutzer angelegt wird. Ebenso kann die Messung manuell getriggert werden. Dies kann besonders bevorzugt erfolgen, bevor der Nutzer die Vorschaubilder betrachtet, die notwendig sind, um sich in der Probe zu orientieren, und auf Basis der Vorschaubilder eine Messung (d.h. die Aufnahme des Bilderstapels) durchzuführen. Das heißt, dass die Korrektur bereits während einer Phase der Orientierung, also vor der eigentlichen Messung (Aufnahme des Bilderstapels) stattfindet. Der in dieser Phase der Orientierung ermittelte Wert des Brechungsindex kann für das Verfahren zur Aufnahme von Bilderstapeln übernommen werden, so dass in dieser Ausgestaltung des Verfahrens keine separate Ermittlung des Brechungsindex mehr notwendig ist.

Das Verfahren umfasst somit den Verfahrensschritt des Bestimmens und Hinterlegens des Brechungsindex, wobei der Brechungsindex für verschiedene Anregungs- und/oder Abregungswellenlängen bestimmt und/oder hinterlegt werden kann. Bei einer Messung können diese hinterlegten Werte des Brechungsindex, vorteilhafterweise in Verbindung mit für die optische Anordnung hinterlegten Kalibrationsdaten, folgende Vorteile aufweisen:
- Beibehalten des Fokus der Beleuchtungsoptik, beispielsweise bei einer Änderung von der Lage der abgebildeten Ebene relativ zur Probe oder Änderung der Anregungswellenlänge;
- Aufnehmen des Bilderstapels mit korrektem räumlichen Abstand zwischen den aufgenommenen Bildern, wenn im Detektionsstrahlengang ein Sprung im Brechungsindex vorliegt;
- Kompensation eines Rest-Fehlers bei der Verwendung von optischen Anordnungen mit Korrekturringen; und
- Korrektur der zuvor genannten Abbildungsfehler.

Eines solche Ausgestaltung des Verfahrens zur Aufnahme von Bilderstapeln kann somit die folgenden Verfahrensschritte umfassen:
b1 Messen und/oder Speichern des Brechungsindex;
b2 Erfassen einer Änderung der Probenposition in Bezug zur optischen Anordnung (z.B. der Beleuchtung- und/oder Detektionsoptik) und/oder Erfassen der Änderung der Anregungswellenlänge, Auslesen von im Verfahrensschritt (b1) gespeicherten Messwerten und/oder vorab gespeicherten Kalibrationsdaten; und
b3 Einstellen mindestens eines Mikroskopparameters in Abhängigkeit vom ermittelten Brechungsindex zum Manipulieren des Strahlenganges.

Bevorzugt kann der Verfahrensschritt (b2) zeitgleich mit einer der beschriebenen Änderungen ausgeführt werden, oder aber erst nachdem die Änderung erfolgt ist.

In einer weiteren Ausgestaltung des erfindungsgemäßen Verfahrens kann bei diesem in Abhängigkeit vom ermittelten Brechungsindex eine Fokuslage mit mindestens einem der folgenden Verfahrensschritte eingestellt werden: - Ändern der effektiven Brennweite mindestens eines Objektives; oder - Verschieben mindestens eines Objektives entlang dessen jeweiliger optischer Achse.

Somit ist es möglich, mit Hilfe der erfindungsgemäßen Verfahren eine Probe zu verschieben, wobei bei dieser Verschiebung auch eine Grenzfläche zwischen dem Immersionsmedium, in welchem die Probe eingebettet ist, und dem vor der Beleuchtungsoptik bzw. dem Beleuchtungsobjektiv vorhandenen Medium, beispielsweise Luft, verschoben wird. Im zweiten Schritt kann der Beleuchtungsstrahlengang im Hinblick auf dessen Fokuslage manipuliert und unter Umständen auftretende Abbildungsfehler korrigiert werden. Hierbei kann besonders bevorzugt die Lage des Fokus innerhalb eines Bildfeldes an einer unveränderten Stelle verbleiben. Durch die Veränderung der Lage der Grenzfläche können sich bereits korrigierte Abbildungsfehler derart verändern, dass eine emeute Korrektur durch dieses Verfahren notwendig ist.

Sofern sich auch zwischen einer Detektionsoptik und der Probe ein Medium mit unterschiedlichem Brechungsindex befindet (beispielsweise, wenn die Probe in einer Küvette angeordnet ist, die zwischen dem Beleuchtungs- und Detektionsobjektiv positioniert wird), kann das Verfahren an diese weitere Grenzfläche dadurch angepasst werden, dass zusätzlich der Detektionsstrahlengang in Bezug auf dessen Fokuslage manipuliert werden kann, wobei diese Manipulation des Detektionsstrahlenganges auch die Korrektur von Abbildungsfehlern der Detektionsoptik umfassen kann.

Diese Ausgestaltung hat den Vorteil, dass eine Manipulation der Fokuslage dazu genutzt werden kann, das Mikroskop an den Brechungsindex der Probe selbst und/oder das die Probe umgebende Immersionsmedium anzupassen. Insbesondere ist eine Kompensation der durch die unbekannten Brechungsindices hervorgerufenen Aberrationen möglich. Besonders vorteilhaft ist eine solche Regulierung der Fokuslage in einem Lichtblattmikroskop, da es in diesem vorteilhaft ist, wenn sichergestellt werden kann, dass sich die Fokusebene des Detektionsobjektiv und die Beleuchtungsebene des Beleuchtungsobjektiv überlagern können und somit eine scharfe Abbildung des vom Lichtblatt beleuchteten zweidimensionalen Bereiches erhalten werden kann.

Die effektive Brennweite des mindestens einen Objektivs und die Fokuslage sind somit als mögliche Mikroskopparameter zu verstehen. Mindestens einer dieser Parameter kann in einer entsprechenden Vorrichtung durch den Strahlengangmanipulator eingestellt werden.

In einer weiteren Ausgestaltung des erfindungsgemäßen Verfahrens kann in Abhängigkeit vom ermittelten Brechungsindex durch das Manipulieren des Strahlenganges ein sphärischer Abbildungsfehler durch ein Ändern einer optischen Wegstrecke eines Strahlenganges in Abhängigkeit vom Abstand zu einer optischen Achse korrigiert werden.

Ein sphärischer Abbildungsfehler tritt insbesondere für nicht-paraxiale Strahlen eines Lichtbündels auf und nimmt mit dem Abstand von der optischen Achse zu. Daher ist es mit dieser Ausgestaltung möglich, bei Probengrößen mit Volumina von ca. 1 cm³ und größer ein optisches System fast vollständig auszuleuchten und dessen Apertur zu nutzen.

In einer weiteren Ausgestaltung des erfindungsgemäßen Verfahrens kann ein solcher sphärischer Abbildungsfehler auch lediglich teilkompensiert oder gar überkompensiert werden.

In einer spezifischen Ausgestaltung des zuvor beschriebenen erfindungsgemäßen Verfahrens kann das Ändern der optischen Wegstrecke ein Verschieben mindestens eines reflektierenden Spiegelabschnittes und/oder das Verschieben einer Grenzfläche eines verformbaren transmittiven Mediums umfassen.

Insbesondere kann in einer weiter spezifizierten Ausgestaltung das Ändern der optischen Wegstrecke gemäß einer Superposition der funktionellen Zusammenhänge r² und r⁴ mit jeweils festgelegter Gewichtung von r² und r⁴ geschehen, wobei r dem Abstand zur optischen Achse entspricht.

Mit anderen Worten kann im erfindungsgemäßen Verfahren die optische Wegstrecke (d.h. die Summe einzelner geometrischer Teilstrecken jeweils multipliziert mit dem über die jeweilige Teilstrecke vorherrschenden Brechungsindex) in Abhängigkeit vom Abstand zur optischen Achse (d.h. in Abhängigkeit von r) vergrößert oder verringert werden.

Die Änderung der optischen Wegstrecke kann mit Δx bezeichnet und insbesondere durch den mathematischen Ausdruck Δx= A*r² + B*r⁴ beschrieben werden. Hierbei ist r der Abstand zur optischen Achse in der Pupille des betrachteten optischen Systems und A bzw. B frei wählbare Vorfaktoren, die eine Gewichtung des quadratischen bzw. des quartischen (biquadratischen) Anteils erlauben. Eine durch diesen mathematischen Ausdruck beschriebene Änderung der optischen Wegstrecke kann somit genutzt werden, die auftretende sphärische Aberration im Medium und/oder in der Probe unbekannter Brechzahl zu kompensieren. Die sphärische Aberration dritter Ordnung wird (bei der Beschreibung von Aberrationen mit Hilfe von Zernicke-Polynomen) mittels quadratischer und quartischer Anteile beschrieben. Diese können mit dem erfindungsgemäßen Verfahren bzw. der erfindungsgemäßen Vorrichtung dieser Ausgestaltung kompensiert werden.

In der erfindungsgemäßen Vorrichtung umfasst der Strahlengangmanipulator mindestens zwei Elemente aus der folgenden Gruppe: (a) ein optisches Element mit elektrisch einstellbarer Brennweite; (b) ein Aktuatormodul zum Verschieben mindestens einer optischen Anordnung; (c) ein Korrekturring; (d) ein Korrekturplattenmodul zum Einbringen von Korrekturplatten in den Strahlengang; (e) ein deformierbarer Spiegel; und (f) ein mit einem transparenten flüssigen Medium gefülltes Hohlelement mit mindestens einer transparenten Eintritts- und/oder Austrittsfläche, wobei die mindestens eine transparente Eintritts- und/oder Austrittsfläche verformbar ist.

Das Element (a), (e) und das Element (f) können ausgestaltet sein, die effektive Brennweite mindestens eines Objektivs zu variieren. Das Element (b) kann ausgestaltet sein, mindestens ein Objektiv entlang dessen jeweiliger optischer Achse zu verschieben.

Die Elemente (c) und (d) können ausgestaltet sein, sphärische Aberrationen auf einen Strahlengang aufzuprägen, d.h. insbesondere einen, bereits sphärische Aberration aufweisenden Strahlengang mit entgegengesetzter sphärischer Aberration zu korrigieren.

Die Elemente (e) und (f) können dazu verwendet werden, sowohl eine Änderung der optischen Weglänge in Abhängigkeit vom Abstand zur optischen Achse einzuführen, als auch (zusätzlich oder alternativ) die effektive Brennweite des entsprechenden Objektivs zu ändern.

Eine spezielle Ausgestaltung des Elements (a) kann eine elektrisch durchstimmbare Linse *(electrically tunable lens; ETL)* sein, Element (d) kann insbesondere Korrekturplatten zum Korrigieren sphärischer Aberrationen und/oder Defokus in den Strahlengang einbringen.

Die Elemente (a), (b), (e) und (f) sind variabel einstellbar und erlauben somit eine größere Flexibilität der erfindungsgemäßen Vorrichtung bzw. der Anwendung des erfindungsgemäßen Verfahrens. Insbesondere kann mit Element (g) die Eintritts- und/oder Austrittsfläche derart verformt werden, dass deren radiales Dickenprofil einer Superposition der funktionellen Zusammenhänge r² und r⁴ mit jeweils festgelegter Gewichtung von r² und r⁴ entsprechen kann.

Da sich die obigen Elemente (a)-(f) sowohl im Dynamikumfang (d.h. dem Bereich der optischen Weglänge, die variiert werden kann) als auch in ihrer Geschwindigkeit unterscheiden, können verschiedene Strahlengangmanipulatoren vorteilhafterweise miteinander kombiniert werden. So ist in einer möglichen Ausgestaltung die langsame Korrektur eines grundsätzlichen Abbildungsfehlers mittels eines Korrekturrings (c) möglich. Insbesondere ist die Korrektur mittels diesen Korrekturrings auf einen bestimmten Brechungsindex n, möglich, wobei diese langsame Korrektur mit hohem Dynamikumfang erfolgt. Die langsame Korrektur kann beispielsweise mit dem Element (f) kombiniert werden, welches zwar nicht den gleichen Dynamikumfang wie der Korrekturring aufweist, jedoch eine viel schnellere Korrektur eines Rest-Fehlers ermöglicht. Dies kann beispielsweise vorteilhaft sein, wenn ein Korrekturring nicht die Dispersion aller verwendeten Materialien berücksichtigt und somit einen Rest-Fehler aufweist, der durch eine zweite Komponente kompensiert werden kann.

In einer vorteilhaften Ausgestaltung des erfindungsgemäßen Verfahrens zur Aufnahme von Bilderstapeln können die obigen Elemente für wenigstens einen, bevorzugt alle Verfahrensschritte des Verfahrens zur Aufnahme von Bilderstapeln vorteilhaft angewendet werden. So kann beispielsweise im Verfahrensschritt (8a) die Fokusebene der Detektionsoptik mittels eines deformierbaren Spiegels verschoben werden und ein und derselbe deformierbare Spiegel im Verfahrensschritt (8b) ebenfalls dazu verwendet wird, den Strahlengang der Detektionsoptik zu manipulieren. Somit können Abbildungsfehler der Detektionsoptik korrigiert werden. Ein Nachführen der Fokusebene der zweiten optischen Anordnung, in diesem Fall des Beleuchtungsobjektivs, kann mit einem weiteren deformierbaren Spiegel erfolgen. Alternativ kann anstelle des weiteren deformierbaren Spiegels ein Kippspiegel verwendet werden.

Das erfindungsgemäße Verfahren kann weiter verbessert werden, indem es den Strahlengang wellenlängenabhängig durch die folgenden Verfahrensschritte manipuliert: (A) Manipulieren des Strahlenganges von Licht einer ersten Wellenlänge gemäß einer zuvor beschriebenen Ausgestaltung des erfindungsgemäßen Verfahrens; und (B) Einstellen mindestens einer weiteren Wellenlänge und jeweiliges, sequenzielles Manipulieren des Strahlenganges von Licht dieser weiteren Wellenlänge gemäß einer zuvor beschriebenen Ausgestaltung des erfindungsgemäßen Verfahrens.

In einer Variation dieses Verfahrens kann im Verfahrensschritt (B) lediglich das Einstellen mindestens einer weiteren Wellenlänge erfolgen, so dass auch bei der weiteren Wellenlänge der Strahlengang von Licht dieser weiteren Wellenlänge basierend auf dem im Verfahrensschritt (A) für die erste Wellenlänge gemessenen Brechungsindex erfolgt.

Ebenso ist es denkbar, dass eine weitere Ausgestaltung des erfindungsgemäßen Verfahrens die folgenden Verfahrensschritte umfasst: (A') Ermitteln des Brechungsindex der im Probenvolumen angeordneten Probe und/oder des im Probenvolumen angeordneten optischen Mediums für Licht der ersten Wellenlänge; (B') Einstellen mindestens einer weiteren Wellenlänge und jeweiliges, sequenzielles Ermitteln des Brechungsindex der im Probenvolumen angeordneten Probe und/oder des im Probenvolumen angeordneten optischen Mediums für Licht dieser zweiten Wellenlänge; (C') Manipulieren des Strahlenganges von Licht der ersten Wellenlänge und der mindestens einen weiteren Wellenlänge gemäß einer zuvor beschriebenen Ausgestaltung des erfindungsgemäßen Verfahrens.

Eine solche wellenlängenabhängige Korrektur kann mit den typischerweise wellenlängenunabhängigen Korrekturelementen wie einem deformierbaren Spiegel oder einer ETL geschehen. Werden diese verwendet, so kann die Korrektur, im Gegensatz zur Verwendung eines Korrekturringes, im Allgemeinen nicht gleichzeitig die unterschiedlichen chromatischen Aberrationen für mehrere Wellenlängen korrigieren. In einem solchen Fall kann die Aufnahme bei unterschiedlichen Wellenlängen sequenziell erfolgen, wobei die deutlich schnelleren Elemente wie deformierbare Spiegel oder ETL hierbei aufgrund ihrer Schaltzeiten von beispielsweise deutlich weniger als 10 ms etwaige Zeitverluste der sequenziellen Aufnahme minimieren können.

An dieser Stelle sei erwähnt, dass auch ein Korrekturring, der z.B. die Anpassung an Medien mit verschiedenen Brechungsindices erlaubt, für die unterschiedlichen Brechungsindices nur jeweils eine bestimmte Dispersion korrigieren kann, also bei Wasser und mit einer Lichtwellenlänge von ca. 500 nm (grünes Licht) mit n=1.33 dessen Dispersion, und bei Glycerol mit n=1.42 dessen Dispersion, aber nicht bei den jeweiligen Brechungsindices von Substanzen mit abweichender Dispersion. Ebenso ist die Anzahl der Substanzen mit unterschiedlichem Brechungsindex beschränkt, deren Dispersion bei dem jeweiligen Brechungsindex korrigiert werden kann, z.B. kann nicht bei n=1.33, n=1.37, n=1.41, n=1.45 usw. jeweils eine unterschiedliche Dispersion des Mediums korrigiert werden.

Im Verfahren kann insbesondere bei (durch den Benutzer) zuvor festgelegten Wellenlängen der Brechungsindex bestimmt werden und nach dieser Messung die wellenlängenabhängigen Korrekturen bzw. Manipulationen im mindestens einen Strahlengang, beispielsweise Beleuchtungs- und Detektionsstrahlengang, erfolgen.

Das erfindungsgemäße Verfahren kann weiter dadurch verbessert werden, dass vorgesehen ist, dieses in vorgegebenen zeitlichen Abständen zu wiederholen.

Dies kann insbesondere für Proben und/oder Immersionsmedien vorteilhaft sein, bei denen beispielsweise durch Verdunstung mit einer zeitlichen Änderung des Brechungsindex zu rechnen ist. Mit dieser Ausgestaltung können femer bei der Observation lebendiger Proben Änderungen der Probe und/oder des die Probe umgebenen Immersionsmediums erfasst und entsprechend korrigiert werden.

In einer Ausgestaltung der entsprechenden Vorrichtung kann ein Zeitgebermodul vorgesehen sein, welches in vorgegebenen zeitlichen Abständen ein Startsignal zum Starten der Messung und/oder Manipulation des mindestens einen Strahlenganges ausgibt.

In einer weiteren Ausgestaltung des erfindungsgemäßen Verfahrens kann das Ermitteln des Brechungsindex der Probe und/oder des im Probenvolumen angeordneten optischen Mediums die folgenden Verfahrensschritte umfassen:
(i) Fokussieren von Messlicht in das Probenvolumen mittels einer optischen Anordnung, wobei das Messlicht auf einer Probenseite der optischen Anordnung durch das optische Medium und ein weiteres optisches Medium transmittiert wird;
(ii) Detektieren des von einem reflektiven Element reflektierten und durch eine weitere optische Anordnung oder durch die optische Anordnung transmittierten Messlichts mit einer Detektoranordnung;
(iii) Ermitteln eines Arbeitsabstandes zwischen der optischen Anordnung und dem reflektiven Element basierend auf dem vom Detektor detektierten Messlicht, wobei für den Arbeitsabstand der Fokus des Messlichts auf dem Reflektor liegt;
(iv) Variieren mindestens eines der folgenden Parameter:
   - Abstand zwischen der optischen Anordnung und dem Probenmedium;
   - Abstand zwischen Reflektor und dem weiteren optischen Medium;
   - Divergenz des Messlichts,
   wobei das Variieren zu einer festgelegten Abstandsänderung einer Fokuslage des Messlichts führt;
(v) Ermitteln eines weiteren Arbeitsabstandes gemäß den Verfahrensschritten (i) bis (iii);
(vi) Ermitteln einer Arbeitsabstandsänderung zwischen dem Arbeitsabstand und dem weiteren Arbeitsabstand; und
(vii) Ermitteln der Brechzahl basierend auf der Abstandsänderung und der Arbeitsabstandsänderung.

Diese Ausgestaltung, insbesondere die Ausgestaltung der Verfahrensschritte zum Ermitteln des Brechungsindex der Probe ist vorteilhaft, da sie erlaubt, den Brechungsindex ohne eine Probe oder ein streuendes Medium im Probenvolumen messen zu können.

Das erfindungsgemäße Verfahren kann zum Ermitteln des Brechungsindex der Probe und/oder des im Probenvolumen angeordneten optischen Mediums alternativ oder zusätzlich ferner die folgenden Verfahrensschritte umfassen:
I. schräges Einstrahlen von Messlicht bezüglich der optischen Achse in das Probenvolumen mittels einer optischen Anordnung;
II. Reflektieren des eingestrahlten Lichts an einem im Probenvolumen an einer ersten Position bereitgestellten reflektiven Element;
III. Abbilden des reflektierten Lichts auf einen ortsauflösenden Detektor;
IV. Auswerten des vom Detektor detektierten Signals hinsichtlich Größe und/oder Versatz des reflektierten Lichts auf dem ortsauflösenden Detektor;
V. Verschieben des reflektiven Elements entlang der optischen Achse an eine zweite Position und Durchführen der Verfahrensschritte (III) und (IV); und
VI. Ermitteln des Brechungsindex basierend auf der Größe und/oder des Versatzes des reflektierten Lichts für die erste und die zweite Position des reflektiven Elements.

Wird das obige Verfahren lediglich bis Verfahrensschritt (d) durchgeführt, so kann die Größe des Fokus auf dem ortsauflösenden Detektor bereits Aufschluss über die Entfernung des reflektiven Elements von der effektiven Fokusebene der optischen Anordnung geben. Diese Entfernung ist abhängig vom Brechungsindex des Mediums und/oder der Probe, als auch von der vom Licht in diesem Medium und/oder der Probe zurückgelegten Weg.

Befindet sich zwischen der optischen Anordnung und dem reflektiven Element ein Medium mit dem Brechungsindex auf den das Objektiv abgestimmt ist, z.B. lediglich Luft, so liegt der Fokus auf der optischen Achse, wenn das reflektive Element in der Fokusebene liegt. Eine solche Messung kann zum Kalibrieren herangezogen werden. Eine laterale Verschiebung des Fokus auf dem ortsauflösenden Detektor in Abhängigkeit einer Verschiebung des reflektiven Elements erlaubt es, den Brechungsindex zu ermitteln.

Eine weitere vorteilhafte Ausgestaltung des erfindungsgemäßen Verfahrens kann ferner das Auslesen von Kalibrationsdaten umfassen, wobei das Einstellen des mindestens einen Mikroskopparameters in Abhängigkeit vom ermittelten Brechungsindex und/oder in Abhängigkeit von den ausgelesenen Kalibrationsdaten erfolgen kann.

Eine entsprechende Ausgestaltung der erfindungsgemäßen Vorrichtung kann folglich ein Speichermodul umfassen, in welchem Kalibrationsdaten mindestens einer optischen Anordnung gespeichert sein können, wobei diese Kalibrationsdaten von einer Steuereinheit abrufbar sind.

Werden im erfindungsgemäßen Verfahren bzw. in der erfindungsgemäßen Vorrichtung Kalibrationsdaten gespeichert, so ist bekannt, welchen brechungsindex- und wellenlängenabhängigen sphärischen Fehler (oder Defokus) die optische Anordnung aufweist. Der als Korrekturwert hinterlegte Brechungsindex bzw. sphärische Fehler kann auch in Abhängigkeit von der Einstellung des verwendeten Korrekturglieds, beispielsweise des Korrekturringes, gespeichert sein. Somit ist es möglich, die Korrektur dieser Anteile bei der Kompensation zu berücksichtigen. Neben der Möglichkeit, diese Daten mittels des erfindungsgemäßen Verfahrens zu gewinnen, können diese elementspezifischen Werte allerdings auch "ab Werk" mitgeliefert werden, da es sich bei diesen um gleichbleibende Eigenschaften (abgesehen von der in den Kalibrationsdaten gespeicherten Abhängigkeit von der Wellenlänge und/oder der Brechzahl) der optischen Anordnung handelt. Solche Kalibrationsdaten können prinzipiell für alle im optischen System, d.h. beispielsweise dem Mikroskop, verwendeten optischen Elemente vorgesehen, d.h. in der Speichereinheit gespeichert sein.

Eine Steuereinheit der erfindungsgemäßen Vorrichtung kann ferner ausgestaltet sein, automatisch oder manuell, den Brechungsindex der Probe und/oder des Immersionsmedium zu messen und in Abhängigkeit des ermittelten Brechungsindex den mindestens einen Strahlengang im Mikroskop derart zu manipulieren, dass dieser an den ermittelten Brechungsindex angepasst ist. Besonders bevorzugt werden durch die Manipulation des Strahlenganges auftretende Aberrationen wie ein Defokus oder sphärischer Aberration kompensiert. Die Steuereinheit kann somit zum Ermitteln des Brechungsindex als auch zum Ansteuern des mindestens einen Strahlengangmanipulators ausgestaltet sein.

Ebenso ist es möglich, dass ein Personalcomputer, welcher das nicht-flüchtige Speichermedium einliest, die Verfahrensschritte des erfindungsgemäßen Verfahrens steuert und beispielsweise den Brechungsindex berechnet. Da Mikroskope aus dem Stand der Technik zunehmend eine computerbasierte Steuerung und/oder Auswertung aufweisen, ist das erfindungsgemäße, nichtflüchtige, computerlesbare Speichermedium besonders vorteilhaft, da es erlaubt, bestehende Mikroskope zu verbessern. Im Allgemeinen können die Mikroskope aus dem Stand der Technik zudem bereits spezielle Ausgestaltungen möglicher Strahlengangmanipulatoren, wie Aktuatoren und Korrekturring, aufweisen, auf die bei der Durchführung des erfindungsgemäßen Verfahrens zurückgegriffen werden kann.

Der vorliegende Erfindungsgegenstand soll im Weiteren anhand beispielhafter Zeichnungen näher beschrieben werden. In den Zeichnungen sind Beispiele vorteilhafter Ausgestaltungen der Erfindung gezeigt, wobei technische Merkmale der jeweiligen Ausgestaltungen beliebig miteinander kombiniert und/oder weggelassen werden können, sofern es nicht auf den mit dem jeweiligen weggelassenen technischen Merkmal erreichten technischen Effekt ankommt. Gleiche technische Merkmale und technische Merkmale gleicher Funktion werden der Übersichtlichkeit halber mit demselben Bezugszeichen versehen.

Die Figuren zeigen:
- Fig. 1: ein Lichtblattmikroskop aus dem Stand der Technik;
- Fig. 2: eine erfindungsgemäße Vorrichtung;
- Fig. 3 und 4: eine erfindungsgemäße Vorrichtung, insbesondere eine erste Messmethode zur Bestimmung der Brechzahl;
- Fig. 5: den Verfahrensschritt zur Bestimmung der Brechzahl gemäß der ersten Messmethode;
- Fig. 6: den Verfahrensschritt zur Bestimmung der Brechzahl gemäß einer zweiten Messmethode;
- Fig. 7 und 8: mögliche Ausgestaltungen der Strahlengänge bei der Bestimmung der Brechzahl gemäß der zweiten Messmethode; und
- Fig. 9 und 10: das Verfahren zur Aufnahme von Bilderstapeln.

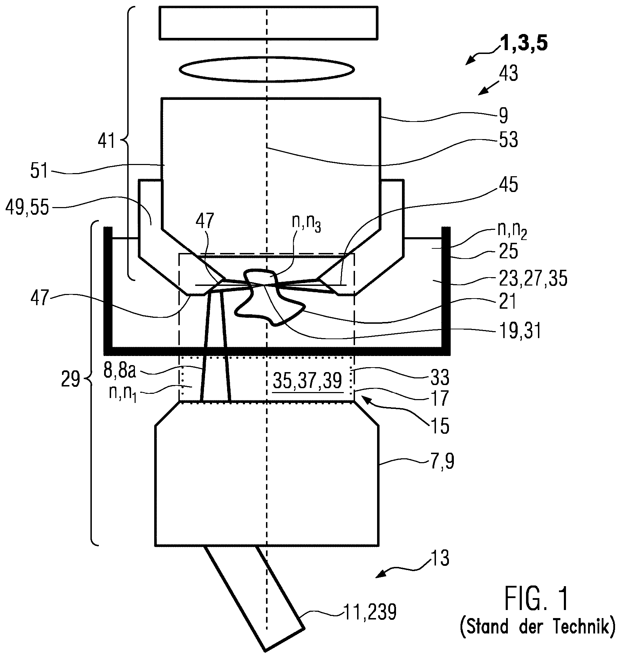

Fig. 1 zeigt ein Mikroskop 1, welches als Konfokal- 3 oder Lichtblattmikroskop 5 ausgestaltet ist. Das Mikroskop 1 umfasst eine als Beleuchtungsobjektiv 7 ausgestaltete optische Anordnung 9, welche Beleuchtungslicht 11 einer Anregungswellenlänge 239 von einer Beleuchtungsseite 13 des Beleuchtungsobjektivs 7 entlang eines Strahlengangs 8 zu einer Probenseite 15 des Beleuchtungsobjektivs 7 transmittiert und das Beleuchtungslicht 11 in einem durch eine gestrichelte Linie dargestellten Probenvolumen 17 fokussiert. Der Strahlengang 8 des Beleuchtungsobjektivs ist ein Beleuchtungsstrahlengang 8a.

Ein Fokus 19 wird innerhalb einer Probe 21 ausgebildet, wobei sich die Probe 21 in einem mit Immersionsflüssigkeit 23 gefülltem Probengefäß 25 befindet. Der Fokus 19 definiert eine Fokusebene, die auch mit dem Bezugszeichen 19 bezeichnet wird.

Die Immersionsflüssigkeit 23 kann als Probenmedium 27 verstanden werden, welches eine Brechzahl n aufweist. Die Brechzahl n kann synonym auch als Brechungsindex n bezeichnet werden.

Ein optisches System 29 umfassend die optische Anordnung 9, das Probengefäß 25 und das darin enthaltene Probenmedium 27 wird durch die Brechzahl n des Probenmediums 27 dahingehend beeinflusst, dass eine räumliche Lage 31 des Fokus 19 für unterschiedliche Brechzahlen n variieren kann.

Auf der Probenseite 15 der optischen Anordnung 9 verläuft das Beleuchtungslicht 11 durch ein Freistrahlvolumen 33, welches durch eine punktierte Linie angedeutet ist.

Sowohl im Freistrahlvolumen 33, als auch im Probengefäß 25 befindet sich ein optisches Medium 35, welches im Freistrahlvolumen 33 im gezeigten Beispiel Luft 37 ist und im Probengefäß 25 das Probenmedium 27.

Die Luft 37 im Freistrahlvolumen 33 entspricht einem weiteren optischen Medium 39, welches die Brechzahl n₁ aufweist. Das Probenmedium 27 hat die Brechzahl n₂ und die Probe 21 die Brechzahl n₃. Alle Brechzahlen n₁ - n₃ können sich voneinander unterscheiden.

Das in Fig. 1 gezeigte Mikroskop 1 umfasst ferner eine Detektionsoptik 41, die aus dem Stand der Technik bekannt ist und somit nicht im Detail beschrieben wird.

Im justierten Zustand 43 liegt der Fokus 19 des Beleuchtungslichts 11 entlang einer optischen Achse 53 exakt in einer Brennebene 45 der Detektionsoptik 41 und entlang der Beleuchtungsrichtung (parallel zur Brennebene 45) zentral im Bildfeld. Aufgrund von Änderungen der Brechzahl n kann es zu Abweichungen vom justierten Zustand 43 kommen, sodass mit dem Mikroskop 1 keine scharfe Abbildung (nicht gezeigt) mehr erzielt werden kann.

Insbesondere ist das in Fig. 1 gezeigte Mikroskop 1 sowohl als Konfokalmikroskop 3, als auch als Lichtblattmikroskop 5 verwendbar. Für die Verwendung als Lichtblattmikroskop 5 (diese ist in Fig. 1 gezeigt) weist das Mikroskop 1 eine reflektive Oberfläche 47 eines im Probenvolumen 17 angeordneten reflektiven Elements 49 auf, wobei das reflektive Element 49 an einem Detektionsobjektiv 51 der Detektionsoptik 41 angeordnet und befestigt ist. Das reflektive Element 49 stellt somit einen Reflektor 55 dar.

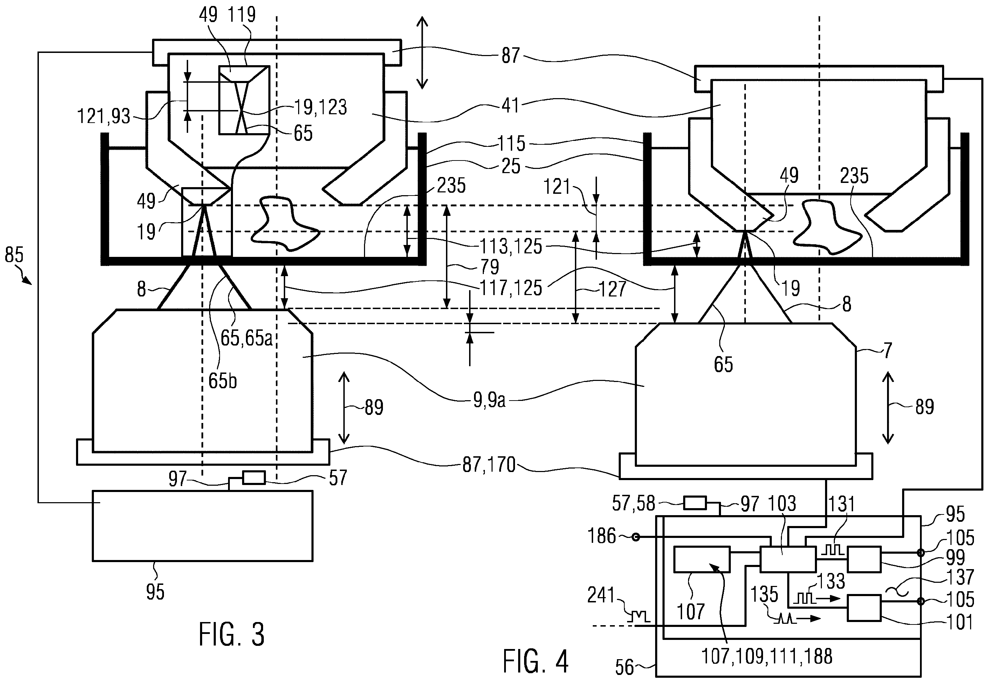

Neben der geneigten reflektiven Oberfläche 47, an welcher in Fig. 1 das Beleuchtungslicht 11 reflektiert wird, weist das reflektive Element 49 eine weitere reflektive Oberfläche 47 auf, welche im Wesentlichen senkrecht zu einer optischen Achse 53 der optischen Anordnung 9 und des Detektionsobjektivs 51 orientiert ist. In der in Fig. 1 gezeigten Ausgestaltung des Mikroskops 1 fallen die optischen Achsen 53 der optischen Anordnung 9 und des Detektionsobjektivs 51 zusammen, können in anderen Ausgestaltungen parallel zueinander angeordnet sein (siehe Fig. 3 oder Fig. 4).

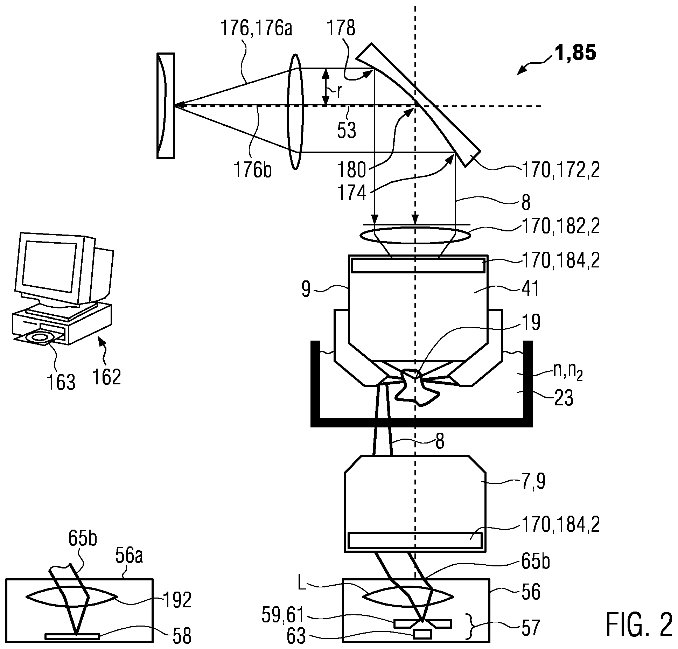

In der Fig. 2 ist der schematische Aufbau einer als Mikroskop 1 ausgestaltete Vorrichtung 85 zur Manipulation mindestens eines Strahlenganges 8 gezeigt.

Ferner zeigt die Fig. 2 einen PC 162, der zur Steuerung der als Mikroskop 1 ausgestalteten erfindungsgemäßen Vorrichtung 85 verwendet wird und ein Programm zum Ausführen der erfindungsgemäßen Verfahren von einem nicht flüchtigen computerlesbaren Speichermedium 163 liest und ausführt.

Anstelle eines PCs 162 kann auch ein Minicomputer, z.B. ein Arduino verwendet werden. Ein solcher Minicomputer (nicht gezeigt) kann beispielsweise zusätzlich zu einem PC, der zur Steuerung des Mikroskops verwendet wird, vorgesehen sein. In dem PC 162 bzw. dem Minicomputer kann ein Speicher vorgesehen sein, der Kalibrationsdaten der optischen Anordnung und/oder verwendeter Korrekturglieder aufweist und dem Mikroskop für die Manipulation des Strahlenganges zur Verfügung stellt.

Das Mikroskop weist neben dem in Fig. 1 gezeigten Aufbau ein Brechungsindexermittlungsmodul 56 auf, welches schematisch in Form eines Rechteck dargestellt ist. Das Brechungsindexermittlungsmodul 56 kann eine Detektoranordnung 57 umfassen, die wiederum eine Blende 59, beispielsweise in Form eines Pinholes 61 und einen Detektor 63 umfassen kann.

In einer zweiten Ausgestaltung des Brechungsindexermittlungsmoduls 56a (in Fig. 2 links gezeigt) kann anstelle der Detektoranordnung 57 ein ortsauflösender Detektor 58 verwendet werden. In beiden Fällen wird entlang des Strahlengangs 8 zurück reflektiertes Messlicht 65b durch eine Linse 192 auf dem Detektor 63 oder dem ortsauflösenden Detektor 58 fokussiert.

Es wird darauf hingewiesen, dass in den Fig. 3 und 4 Messlicht 65 gezeigt ist, welches als eingestrahlte Messlicht 65a bezeichnet wird, welches am reflektiven Element 49 reflektiert und als besagtes reflektiertes Messlicht 65b zum Brechungsindexermittlungsmodul 56 oder 56a gelangt.

Die Vorrichtung 85 der Fig. 2 weist ferner mehrere Strahlengangmanipulatoren 170 auf. Insbesondere sind dies ein deformierbarer Spiegel 172, der eine (zumindest abschnittsweise) variabel einstellbare Krümmung 174 aufweist und insbesondere für den Strahlengang 8 der Detektionsoptik 41 ermöglicht, optische Weglängen 176 in Randbereichen 178 des deformierbaren Spiegels 172, d.h. äußere optische Weglängen 176a im Vergleich zu optischen Weglängen 176 in einem Zentrum 180 des Strahlengangs 8, d.h. zentralen optischen Weglängen 176b zu verringern oder zu vergrößern.

Ferner umfasst die Vorrichtung 85 der Fig. 2 ein optisches Element mit elektrisch einstellbarer Brennweite 182, kurz: ETL. Mit der ETL 182 ist es möglich, eine effektive Brennweite (nicht eingezeichnet) der Detektionsoptik 41 zu variieren und somit einen vom Brechungsindex n₂ der Immersionsflüssigkeit 23 abhängigen Versatz (nicht gezeigt) des Fokus 19 der Detektionsoptik 41 zu kompensieren.

Mit den Strahlengangmanipulatoren 170 können folglich Mikroskopparameter 2, wie beispielsweise die sphärischer Aberration oder die effektive Brennweite, eingestellt werden.

Sowohl die Detektionsoptik 41, als auch das Beleuchtungsobjektiv 7 umfasst einen Korrekturring 184, der in Fig. 2 lediglich schematisch als Rechteck eingezeichnet ist.

Die in Fig. 2 gezeigten Strahlengangmanipulatoren 170 können in unterschiedlichen Ausgestaltungen der Vorrichtung 85 in unterschiedlichen Kombinationen vorgesehen sein. D.h., dass der deformierbare Spiegel 172, die ETL 182 und der bzw. die Korrekturringe 184 optional sind.

Während die ETL 182, im Wesentlichen einen Versatz des Fokus 19 korrigieren kann, sind sowohl der deformierbare Spiegel 172, als auch ein Korrekturring 184 in der Lage, optische Weglängen 176, insbesondere in Abhängigkeit von einem Abstand r zur optischen Achse 53 zu variieren.

In den Fig. 3 und 4 ist eine schematische Darstellung einer erfindungsgemäßen Vorrichtung 85, insbesondere einer ersten Messmethode zur Bestimmung der Brechzahl n gezeigt.

Die Vorrichtung 85 umfasst die optische Anordnung 9, welche mittels eines Aktuatormoduls 87 eine Translation 89 durchführen kann, das reflektive Element 49, welches reflektiertes Messlicht 65b mittels der optischen Anordnung 9 auf eine Messfläche (nicht gezeigt) der Detektoranordnung 57 bzw. auf dem ortsauflösenden Detektor 58 (siehe Fig. 2) abbildet, wenn das reflektive Element 49 in einem Arbeitsabstand 79 zur optischen Anordnung 9 positioniert ist. In dieser Ausgestaltung ist die optische Anordnung 9 identisch mit einer weiteren optischen Anordnung 9a.

Die gezeigte Detektionsoptik 41 weist ein Bildfeld 237 auf, welches auch bei Manipulation eines Strahlengangs bevorzugt im Wesentlichen beibehalten, also nicht geändert wird.

Mittels mindestens eines der Aktuatormodule 87 kann ein Abstand 93 zwischen dem Reflektor 55 und dem Fokus 19 des Messlichts 65 variiert werden.

Eine schematische Darstellung in Fig. 3 zeigt den Fall, in welchem der Fokus 19 des Messlichts 65 vom reflektiven Element 49 beabstandet ist und der Abstand 93 zwischen dem reflektiven Element 49 und dem Fokus 19 des Messlichts 65 gemessen werden kann.

Die Vorrichtung 85 umfasst ferner eine Auswerteeinheit 95, die lediglich für die Vorrichtung 85 der Fig. 4 detailliert dargestellt ist. Die Auswerteeinheit 95 ist datenübertragend, d.h. über Datenleitungen 97 mit der Detektoranordnung 57 bzw. dem ortsauflösenden Detektor 58 (diese ist lediglich schematisch durch ein Rechteck dargestellt) verbunden ist, ein Arbeitsabstandsermittlungsmodul 99 und ein Brechzahlmodul 101 zur Bestimmung der Brechzahl n, wobei das Brechzahlmodul 101 datenübertragend mit dem Aktuatormodul 87 bzw. dem Aktuatormodulen 87 und dem Arbeitsabstandsermittlungsmodul 99 verbunden ist, wobei diese Verbindung zentral über einen Controller 103, d.h. eine Steuereinheit, erfolgt. In anderen Ausgestaltungen kann das Brechzahlmodul 101 direkt mit dem Aktuatormodulen 87 verbunden sein.

Der Controller 103 kann ein Triggersignal 241 empfangen, welches bei Einbringen der Probe in das Mikroskop durch einen Computer beim Anlegen eines neuen Projekts oder manuell durch den Benutzer erzeugt werden kann. Das codiert dargestellte Triggersignal 241 kann den Start eines der erfindungsgemäßen Verfahren bewirken.

Die Auswerteeinheit 95 kann Teil des Brechungsindexermittlungsmoduls 56 sein.

Ferner ist auch das Arbeitsabstandsermittlungsmodul 99 über den Controller 103 mit den Aktuatormodulen 87 verbunden. Der Controller 103 kann zudem über mindestens einen weiteren Manipulationsausgang 186 mit dem mindestens einen Strahlengangmanipulator 170 (siehe Fig. 2) datenübertragend verbunden sein. In der gezeigten Ausgestaltung ist der Controller mit dem als Aktuatormodul 87 ausgestalteten Strahlengangmanipulator 170 verbunden.

Sowohl das Arbeitsabstandsermittlungsmodul 99, als auch das Brechzahlmodul 101 weisen einen Datenausgang 105 auf.

Die Auswerteeinheit 95 kann ferner eine Speichereinheit 107 umfassen, in der beispielsweise eine vorab definierte Funktion 109 oder Messwerte 111 gespeichert sind bzw. gespeichert werden können. Zudem können in der Speichereinheit 107 Kalibrationsdaten 188 gespeichert sein, die beispielsweise mögliche Abbildungsfehler der verwendeten Optiken, wie dem Beleuchtungsobjektiv 7 und/oder der Detektionsoptik 41 erfassen, sodass diese entsprechend dem erfindungsgemäßen Verfahren bzw. der erfindungsgemäßen Vorrichtung bei der Manipulation des Strahlenganges 8 berücksichtigt werden können. Insbesondere bei Objektiven mit Korrekturelement kann z.B. die für verschiedene Einstellungen des Brechungsindex n vorliegende Farbabhängigkeit hinterlegt sein. Bei durchstimmbaren Linsen kann z.B. die Abweichung von einer idealen Linse in Abhängigkeit der einstellten Brennweite hinterlegt sein.

Das reflektive Element 49 der Fig. 3 und 4 befindet sich in einem Abstand 113 zur Grenzfläche 235 zwischen optischem Medium 35 und weiterem optischen Medium 39 (in diesem Fall Luft 37). Der Einfachheit halber wird eine Wand 115 des Probengefäßes 25 als infinitesimal dünn angesehen und nicht berücksichtigt.

Die optische Anordnung 9 befindet sich in einem Abstand 117 zum Probenmedium 27 (auch hier wird die Wand 115 nicht berücksichtigt.

Im Wesentlichen kann der Zustand der Fig. 4 aus dem Zustand der Fig. 3 erhalten werden, indem der Abstand 117 zwischen der optischen Anordnung 9 und dem Probenmedium 27 vergrößert wird und nachfolgend das Aktuatormodul 87 der Detektionsoptik 41 der optischen Anordnung 9 folgend nachgefahren wird; oder der Abstand 113 zwischen dem Reflektor 55 und dem weiteren optischen Medium 39 verringert wird und nachfolgend durch das Aktuatormodul 87 die optische Anordnung 9 vom Reflektor 55 weg bewegt wird.

Der Fall a) ist in Fig. 3 anhand des Ausschnittes 119 gezeigt. In diesem ist erkennbar, dass das Variieren des Abstandes 117 zwischen der optischen Anordnung 9 und dem Probenmedium 27 zu einer festgelegten, d.h. messbaren Abstandsänderung 121 einer Fokuslage 123 des Messlichts 65 führt.

In Fig. 3 befindet sich das reflektive Element 49 im Arbeitsabstand 79 der optischen Anordnung 9, wohingegen in Fig. 4 mindestens ein Parameter 125, umfassend den Abstand 113 und den Abstand 117 variiert wurde, um einen weiteren Arbeitsabstand 127 einzustellen.

Der Arbeitsabstand 79 der Fig. 3 und der weitere Arbeitsabstand 127 der Fig. 4 werden in Form eines Arbeitsabstandswertes 131 (schematisch durch ein elektrisches Signal dargestellt) vom Arbeitsabstandsermittlungsmodul 99 an den Controller 103 übergeben, wobei der Controller über ein Rechenmodul (nicht gezeigt) aus dem Arbeitsabstandswert 131 des Arbeitsabstandes 79 und dem Arbeitsabstandswert 131 des weiteren Arbeitsabstandes 127 eine Arbeitsabstandsänderung 129 berechnet, die in Form eines Arbeitsabstandsänderungswertes 133 an das Brechzahlmodul 101 übergeben wird. Ferner ermittelt der Controller 103 aufgrund der datenübertragenden Verbindung mit den Aktuatormodulen 87 die Abstandsänderung 121 und überträgt diese in Form eines Abstandsänderungswertes 135 an das Brechzahlmodul 101. Der Abstandsänderungswert 135 ist in Fig. 4 schematisch, rein beispielhaft zur Unterscheidung in Form dreieckiger Pulse gezeigt.

Basierend auf dem Arbeitsabstandsänderungswert 133 und dem Abstandsänderungswert 135 berechnet das Brechzahlmodul 101 die Brechzahl n oder einen zur Brechzahl n proportionalen Messwert und stellt diese am Datenausgang 105 in Form eines Brechzahlwertes 137 zur Verfügung. Der Brechzahlwert 137 ist zur Unterscheidung schematisch durch eine Sinusschwingung verdeutlicht.

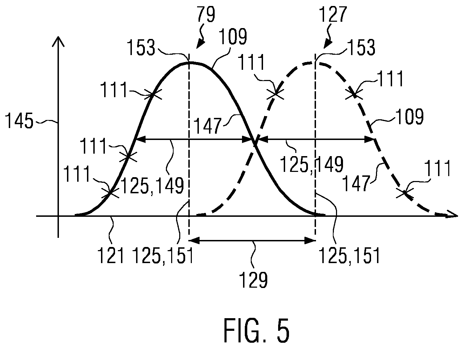

Anhand der Fig. 5 soll eine Möglichkeit des Ermittelns des Arbeitsabstandes 79 verdeutlicht werden. Gezeigt ist eine von der Detektoranordnung 57 detektierten Größe 145 (wie beispielsweise eine Spannung oder ein Strom), die in Abhängigkeit der Abstandsänderung 121 sowohl für den Arbeitsabstand 79 als auch für den weiteren Arbeitsabstand 127 gezeigt ist. Genauer gesagt zeigt die Fig. 5 jeweils die an die Messwerte 111 angepasste vorab definierte Funktion 109, wobei die vorab definierten Funktion 109 durch eine Gaußfunktion 147 dargestellt ist.

Die Gaußfunktion 147 weist lediglich zwei Parameter 125 auf, namentlich eine Halbwertsbreite 149 und ein Zentrum 151, wobei sich das Zentrum an einem Extremwert 153 der Gaußfunktion 147 befindet. Für die Gaußfunktion 147 beträgt die Anzahl N an Parametern 125 zwei. Werden andere vorab definierte Funktionen 109 genutzt, so entspricht die Anzahl notwendiger Messwerte 111 der Anzahl N an Parametern 125 der genutzten Funktion 109.

Die unterschiedlich gezeichneten Gaußfunktionen 147 erlauben es, den Arbeitsabstand 79, als auch den weiteren Arbeitsabstand 127 und eine sich daraus ergebende Arbeitsabstandsänderung 129 zu berechnen. Aus der Arbeitsabstandsänderung 129 und der Abstandsänderung 121 kann das Brechzahlmodul 101(siehe Fig. 4) den Brechungsindex bzw. die Brechzahl n berechnen.

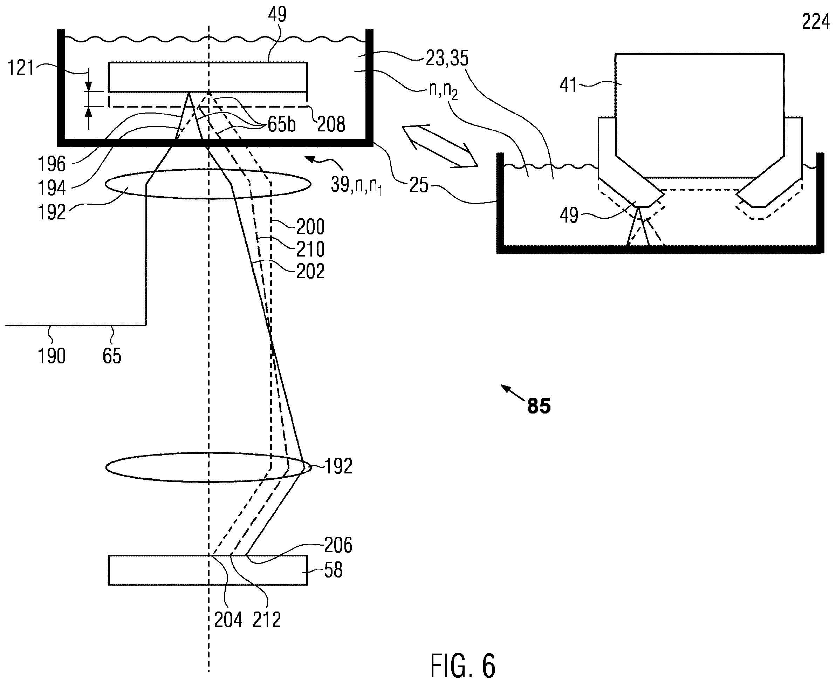

In der Fig. 6 ist ein Ausschnitt der erfindungsgemäßen Vorrichtung 85 gezeigt, insbesondere eine zweite Messmethode zur Bestimmung der Brechzahl n gezeigt.

Gezeigt ist das reflektive Element 49, welches sich wie rechts gezeigt direkt an der Detektionsoptik 41 befinden kann, wobei sich das reflektive Element 49 in der Immersionsflüssigkeit 23, d.h. dem optischen Medium 35 befindet.

Über einen Detektionsstrahlengang 190 wird das Messlicht 65 über die Linse 192 in das Probengefäß 25, in welchem sich das optische Medium 35 befindet, eingeleitet.

Sofern das weitere optische Medium 39, welches sich zwischen der Linse 192 und dem Probengefäß 25 befindet, die gleiche Brechzahl n₁ aufweist wie das optische Medium 35 (das heißt n₁ = n₂), erhält man einen ersten Immersionsstrahlengang 194, der kurz gestrichelt dargestellt ist.

Sofern das weitere optische Medium 39 optisch dichter als das optische Medium 35 ist (das heißt n₁ > n₂), wird der Detektionsstrahlengang 190 gebrochen und man erhält einen zweiten Immersionsstrahlengang 196, der mit einer durchgezogenen Linie gezeichnet ist.

In beiden Fällen trifft der jeweilige Immersionsstrahlengang 194, 196 auf das reflektive Element 49 und wird von diesem reflektiert, sodass das reflektierte Messlicht 65b entlang eines jeweiligen Messstrahlengangs 198 zum ortsauflösenden Detektor 58 geleitet wird. Dies kann ebenso über eine Linse 192, welche das reflektierte Messlicht 65b fokussiert, geschehen.

Betrachtet man einen, sich aus dem ersten Immersionsstrahlengang 194 ergebenden ersten Messstrahlengang 200 und vergleicht diesen mit einen, sich aus dem zweiten Immersionsstrahlengang 196 ergebenden zweiten Messstrahlengang 202, so wird deutlich, dass ein zweiter Auftreffpunkt 206 des zweiten Messstrahlengangs 202 seitlich versetzt zu einem ersten Auftreffpunkt 204 des ersten Messstrahlengangs 200 auf dem ortsauflösenden Detektor 58 auftritt.

Wird zudem das reflektive Element 49 in eine zweite Position 208 bewegt, dargestellt durch eine punktierte Linie, so ergibt sich ein dritter Messstrahlengang 210, der in einem dritten Auftreffpunkt 212 auf dem ortsauflösenden Detektor 58 auftrifft. Die Auswertung der Auftreffpunkte 204, 206, 212 und insbesondere die Änderung zwischen diesen liefert in Abhängigkeit von der Abstandsänderung 121 des reflektiven Elements 49 den Brechungsindex n₂ des optischen Mediums 35.

Ferner kann mit dem in Fig. 6 schematisch dargestellten Verfahren auch das Einstellen eines Autofokus realisiert werden. Dies ist aus dem Stand der Technik bekannt und soll an dieser Stelle nicht weiter erläutert werden.

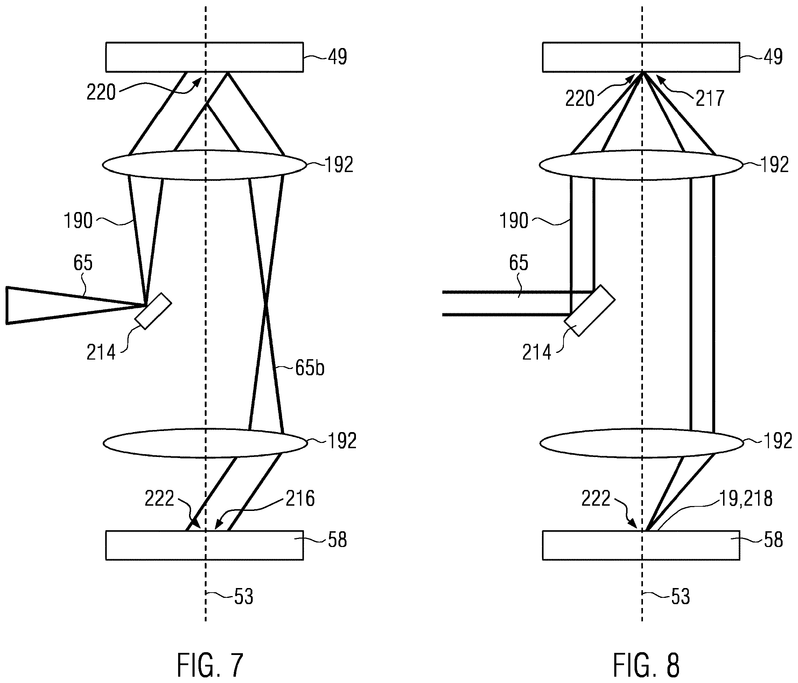

In den Fig. 7 & 8 sind mögliche Ausgestaltungen der (vereinfacht dargestellten Strahlengänge 8 bei der Bestimmung der Brechzahl gemäß der zweiten Messmethode der Fig. 6 gezeigt. Der Einfachheit halber ist kein Probengefäß gezeigt und die Reflexion des Detektionsstrahlengangs 190 erfolgt an einer Position des reflektiven Elements 49.

Zusätzlich zum in Fig. 6 gezeigten Aufbau zeigen die Figuren einen Umlenkspiegel 214, der das Messlicht 65 hin zum reflektiven Element 49 umlenkt.

Die Detektionsstrahlengänge 190 unterscheiden sich dadurch, dass dieser in Fig. 7 auf dem Umlenkspiegel 214 fokussiert ist. Dies hat zur Folge, dass aufgrund der beiden Linsen 192 das reflektierte Messlicht 65b kollimiert auf den ortsauflösenden Detektor 58 auftrifft.

Die Änderung des Brechungsindex n hat in dieser Konfiguration zur Folge, dass ein breiter Lichtfleck 216 in seiner Gesamtheit seine Lage auf dem ortsauflösenden Detektor 58 ändert. Wird zudem das reflektive Element 49 entlang der optischen Achse 53 bewegt, so führt dies zu einer Verkleinerung oder Vergrößerung des breiten Lichtflecks 216.

In der Konfiguration des Detektionsstrahlengangs 190 der Fig. 8 dagegen trifft dieser kollimiert auf dem Umlenkspiegel 214 auf. Durch die Abbildung der beiden Linsen 192 bildet sich zum einen ein Zwischenfokus 217 auf dem reflektiven Element 49 und zum anderen ein Fokus 19 bzw. ein fokussierter Lichtfleck 218 auf dem ortsauflösenden Detektor 58 heraus.

Neben unterschiedlichen notwendigen Auswerte Algorithmen erlauben es diese beiden Konfigurationen sowohl eine Lichtintensität im Probenvolumen 220, als auch eine Lichtintensität auf dem Detektor 222 zu variieren. So ist beispielsweise bei sehr geringer Intensität des Messlichts 65 bzw. bei starker Abschwächung desselben im Probenvolumen die Konfiguration der Fig. 8 zu bevorzugen.

Falls die Intensität des Messlichts 65 in einem Grenzbereich des Dynamikbereichs des ortsauflösenden Detektors 58 liegt, so ist die Korrelation der Fig. 7 gegenüber jener der Fig. 8 von Vorteil.

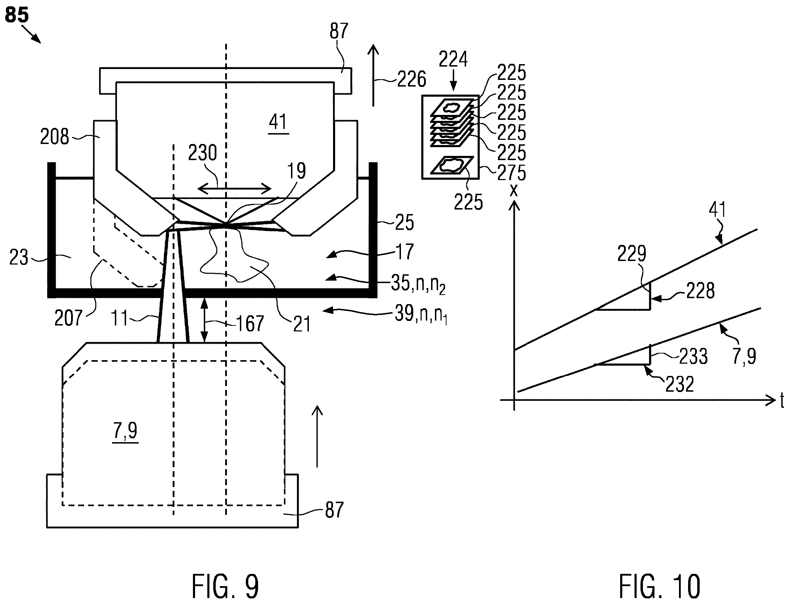

Mittels der Fig. 9 & 10 soll das Verfahren zur Aufnahme von Bilderstapeln kurz erläutert werden.

Gezeigt ist eine Vorrichtung 85, mit der von einer im Probenvolumen 17 befindlichen Probe 21 eine 3-dimensionale Aufnahme erstellt werden soll. Dies geschieht über die Aufnahme eines Bilderstapels 224, der schematisch neben dem Probengefäß 25 dargestellt ist. Der Bilderstapel 224 umfasst eine Vielzahl einzelner Bilder 225.

Um einen solchen Bilderstapel 224 aufzunehmen kann beispielsweise die Detektionsoptik 41 in einer Verschieberichtung 226 verschoben werden. In der Fig. 9 befindet sich der Fokus 19 der Detektionsoptik 41 bereits außerhalb der Probe 21, d.h., dass diese von einer ersten Position 207 (gestrichelt dargestellt) in die zweite Position 208 verschoben wurde.

In Fig. 10 ist ein Verschiebeweg x der Detektionsoptik 41 über die Zeit t dargestellt, wobei sich eine erste Steigung 228 aus einem Scanweg 229 und der Zeit t ergibt, welche im Grunde genommen eine Geschwindigkeit, mit der die Detektionsoptik 41 in Verschieberichtung 226 verschoben wird, angibt.

Da bei feststehenden Beleuchtungsobjektiv 7 der Fokus 19 des Beleuchtungslichts 11 einen seitlichen Versatz 230 aufweisen würde, muss auch das Beleuchtungsobjektiv 7 in Verschieberichtung 226 bewegt werden. Für beide Bewegungen kann beispielsweise jeweils ein Aktuatormodul 87 verwendet werden.

Da sich beim Verfahren der Detektionsoptik 41 jedoch ein Streckenanteil im optischen Medium 165 und ein Streckenanteil im weiteren optischen Medium 167 relativ zueinander ändern, muss das Beleuchtungsobjektiv 7 mit einer zweiten Steigung 232 im Verschieberichtung 226 bewegt werden, die geringer ist als die erste Steigung 228. In der selben Zeit t muss das Beleuchtungsobjektiv 7 um einen Nachführweg 233 bewegt werden. Sofern das optische Medium 35 und das weitere optische Medium 39 den gleichen Brechungsindex n₂ bzw. n₁ aufweisen entspricht die erste Steigung 228 der zweiten Steigung 232. Sobald allerdings der Brechungsindex n₂ des optischen Mediums 35 vom Brechungsindex n₁ des weiteren optischen Mediums 39 abweicht unterscheiden sich die Steigungen 228, 232.

Hinsichtlich des mit Hilfe der Fig. 9 und 10 beschriebenen Verfahrens zur Aufnahme von Bilderstapeln ist die Detektionsoptik 41 als erste optische Anordnung 9b und das Beleuchtungsobjektiv 7 als zweite optische Anordnung 9c anzusehen.

Sofern in einer weiteren Ausgestaltung des Verfahrens zuerst das Beleuchtungsobjektiv 7 verfahren wird (wobei in diesem Fall das Beleuchtungsobjektiv 7 als erste optische Anordnung 9b bezeichnet werden kann), so wird im weiteren Verfahrensschritt die Detektionsoptik 41 nachgeführt. In diesem Fall entspricht die Detektionsoptik 41 der zweiten optischen Anordnung 9c.

Während der Aufnahme des Bilderstapels 224 kann somit in einer Ausgestaltung des erfindungsgemäßen Verfahrens in jeder Zwischenposition, d.h. bei jedem Bild des Bilderstapels 224 der Brechungsindex der Probe 21 und/oder des Immersionsmedium 23 gemessen werden, während in einer anderen Ausgestaltung des erfindungsgemäßen Verfahrens der Brechungsindex der Probe 21 und/oder des Immersionsmediums 23 einmalig gemessen wird und aus diesem Brechungsindex die Unterschiede in den Steigungen 228 und 232 berechnet werden. Insbesondere bei den zuvor genannten Klärungsverfahren, bei denen der Brechungsindex n des Immersionsmedium 23 an jenen der Probe 21 angepasst wird, ist die zuletzt genannte Ausgestaltung des erfindungsgemäßen Verfahrens vorteilhaft.

### Bezugszeichen

- 1: Mikroskop
- 2: Mikroskopparameter
- 3: Konfokalmikroskop
- 5: Lichtblattmikroskop
- 7: Beleuchtungsobjektiv
- 8: Strahlengang
- 8a: Beleuchtungsstrahlengang
- 9: optische Anordnung
- 9a: weitere optische Anordnung
- 9b: erste optische Anordnung
- 9c: zweite optische Anordnung
- 11: Beleuchtungslicht
- 13: Beleuchtungsseite
- 15: Probenseite
- 17: Probenvolumen
- 19: Fokus / Fokusebene
- 21: Probe
- 23: Immersionsflüssigkeit
- 25: Probengefäß
- 27: Probenmedium
- 29: optisches System
- 31: räumliche Lage
- 33: Freistrahlvolumen
- 35: optisches Medium
- 37: Luft
- 39: weiteres optisches Medium
- 41: Detektionsoptik
- 43: justierter Zustand
- 45: Brennebene
- 47: reflektive Oberfläche
- 49: reflektives Element
- 51: Detektionsobjektiv
- 53: optische Achse
- 55: Reflektor
- 56: Brechungsindexermittlungsmodul
- 56a: zweite Ausgestaltung des Brechungsindexermittlungsmoduls
- 57: Detektoranordnung
- 58: ortsauflösender Detektor
- 59: Blende
- 61: Pinhole
- 63: Detektor
- 65: Messlicht
- 65a: eingestrahltes Messlicht
- 65b: reflektiertes Messlicht
- 79: Arbeitsabstand
- 85: Vorrichtung
- 87: Aktuatormodul
- 89: Translation
- 93: Abstand zwischen Reflektor und Fokus des Messlichts
- 95: Auswerteeinheit
- 97: Datenleitung
- 99: Arbeitsabstandsermittlungsmodul
- 101: Brechzahlmodul
- 103: Controller
- 105: Datenausgang
- 107: Speichereinheit
- 109: vorab definierte Funktion
- 111: Messwert
- 113: Abstand zwischen Reflektor und weiteren optischen Medium
- 115: Wand
- 117: Abstand zwischen optische Anordnung und Probenmedium
- 119: Ausschnitt
- 121: Abstandsänderung
- 123: Fokuslage
- 125: Parameter
- 127: weiterer Arbeitsabstand
- 129: Arbeitsabstandsänderung
- 131: Arbeitsabstandswert
- 133: Arbeitsabstandsänderungswert
- 135: Abstandsänderungswert
- 137: Brechzahlwert
- 147: Gaußfunktion
- 149: Halbwertsbreite
- 151: Zentrum
- 153: Extremwert
- 162: PC
- 163: nichtflüchtiges computerlesbares Speichermedium
- 165: Streckenanteil im optischen Medium
- 167: Streckenanteil im weiteren optischen Medium
- 170: Strahlengangmanipulator
- 172: deformierbarer Spiegel
- 174: Krümmung
- 176: optische Weglängen
- 176a: äußere optische Weglängen
- 176b: zentraler optische Weglänge
- 178: Randbereich
- 180: Zentrum
- 182: optisches Element mit elektrisch einstellbarer Brennweite
- 184: Korrekturring
- 186: Manipulationsausgang
- 188: Kalibrationsdaten
- 190: Detektionsstrahlengang
- 192: Linse
- 194: erster Immersionsstrahlengang
- 196: zweiter Immersionsstrahlengang
- 198: Messstrahlengang
- 200: erster Messstrahlengang
- 202: zweiter Messstrahlengang
- 204: erster Auftreffpunkt
- 206: zweiter Auftreffpunkt
- 207: erste Position
- 208: zweite Position
- 210: dritter Messstrahlengang
- 212: dritter Auftreffpunkt
- 214: Umlenkspiegel
- 216: breiter Lichtfleck
- 217: Zwischenfokus
- 218: fokussierter Lichtfleck
- 220: Lichtintensität im Probenvolumen
- 222: Lichtintensität auf den Detektor
- 224: Bilderstapel
- 225: Bild
- 226: Verschieberichtung
- 228: erste Steigung
- 229: Scanweg
- 230: seitlicher Versatz
- 232: zweite Steigung
- 233: Nachführweg
- 235: Grenzfläche
- 237: Bildfeld
- 239: Anregungswellenlänge
- 241: Triggersignal

- n: Brechzahl
- n₁: Brechzahl des weiteren optischen Mediums
- n₂: Brechzahl des Probenmediums
- n₃: Brechzahl der Probe
- r: Abstand
- t: Zeit
- x: Verschiebeweg

- n₃: **Brechzahl** der Probe
- r: Abstand
- t: Zeit
- x: Verschiebeweg

## Patentansprüche

1. Verfahren zum Manipulieren mindestens eines Strahlenganges (8) in einem Mikroskop (1), insbesondere in einem Lichtblattmikroskop (5), umfassend die folgenden Verfahrensschritte:
- Ermitteln des Brechungsindex (n) einer in einem Probenvolumen (17) angeordneten Probe (21) und/oder eines in einem Probenvolumen (17) angeordneten optischen Mediums (35); und
- Einstellen mindestens eines Mikroskopparameters (2) in Abhängigkeit vom ermittelten Brechungsindex (n) zum Manipulieren des Strahlenganges (8) mittels mindestens eines Strahlengangmanipulators (170),
**dadurch gekennzeichnet, dass** der mindestens eine Strahlengangmanipulator (170) mindestens zwei Elemente aus der folgenden Gruppe umfasst:
- ein optisches Element mit elektrisch einstellbarer Brennweite (182);
- ein Aktuatormodul (87) zum Verschieben einer optischen Anordnung (9);
- ein Korrekturring (184);
- ein Korrekturplattenmodul zum Einbringen von Korrekturplatten in den Strahlengang;
- ein deformierbarer Spiegel (172);
- ein mit einem transparenten flüssigen Medium gefülltes Hohlelement mit mindestens einer transparenten Eintritts- und/oder Austrittsfläche, wobei die mindestens eine transparente Eintritts- und/oder Austrittsfläche verformbar ist,
- wobei die verschiedenen Elemente miteinander kombiniert sind.

2. Verfahren nach Anspruch 1, wobei in Abhängigkeit vom ermittelten Brechungsindex (n) eine Fokuslage mit mindestens einem der folgenden Verfahrensschritte eingestellt wird:
- Ändern der effektiven Brennweite mindestens einer optischen Anordnung (9); oder
- Verschieben mindestens einer optischen Anordnung (9) entlang deren jeweiliger optischer Achse (53).

3. Verfahren nach Anspruch 1 oder 2, wobei das Verfahren die folgenden Verfahrensschritte umfasst:
- Verschieben einer Probe (21), wobei bei dieser Verschiebung eine Grenzfläche (235) zwischen dem Immersionsmedium (23), in welchem die Probe (21) eingebettet ist, und dem vor dem Beleuchtungsobjektiv (7) vorhandenen Medium (39), beispielsweise Luft, verschoben wird; und
- Einstellen mindestens eines Mikroskopparameters (2) in Abhängigkeit vom ermittelten Brechungsindex (n) zum Manipulieren des Strahlenganges (8).

4. Verfahren nach Anspruch 1, wobei das Ändern der optischen Weglänge (176) ein Verschieben mindestens eines reflektierenden Spiegelabschnittes (178, 180) und/oder das Verschieben einer Grenzfläche eines verformbaren transmittiven Mediums umfasst.

5. Verfahren nach Anspruch 4, wobei das Ändern der optischen Weglänge (176) im Wesentlichen gemäß einer Superposition der funktionellen Zusammenhänge r² und r⁴ mit jeweils festgelegter Gewichtung von r² und r⁴ geschieht, wobei r dem Abstand zur optischen Achse (53) entspricht.

6. Verfahren nach einem der Ansprüche 1 bis 5, wobei das Verfahren den Strahlengang (8) wellenlängenabhängig durch die folgenden Verfahrensschritte manipuliert:
(A) Manipulieren des Strahlenganges (8) von Licht (11) einer ersten Wellenlänge gemäß einem Verfahren nach einem der Ansprüche 1 bis 3; und
(B) Einstellen mindestens einer weiteren Wellenlänge.

7. Verfahren zur Aufnahme von Bilderstapeln (224) in einem Mikroskop (1), insbesondere in einem Lichtblattmikroskop (5), wobei das Verfahren die folgenden Verfahrensschritte umfasst:
- Durchführen des Verfahrens zum Manipulieren mindestens eines Strahlengangs gemäß einem der Ansprüche 1 bis 6;
- Erfassen einer Änderung der Position der Probe (21) in Bezug zur optischen Anordnung (9) und/oder Erfassen der Änderungen einer Anregungswellenlänge (239) vor dem Einstellen mindestens eines Mikroskopparameters (2); und
- Aufnehmen und/oder Speichern eines Bildes (225) zur Erzeugung des Bilderstapels (224).

8. Verfahren zur Aufnahme von Bilderstapeln (224) in einem Mikroskop (1), insbesondere in einem Lichtblattmikroskop (5), wobei das Verfahren die folgenden Verfahrensschritte umfasst:
(8a) Verschieben einer Fokusebene (19) einer ersten optischen Anordnung (9b) um einen voreingestellten Scanweg (229);
(8b) Manipulieren des mindestens einen Strahlenganges (8) der ersten optischen Anordnung (9b) gemäß einer Ausgestaltung des erfindungsgemäßen Verfahrens zum Manipulieren eines Strahlenganges (8) in einem Mikroskop (1) zum Korrigieren von Abbildungsfehlern der ersten optischen Anordnung (9b) nach einem der Ansprüche 1 bis 6;
(8c) Verschieben oder Nachführen der Fokusebene (19) einer zweiten optischen Anordnung (9c) um einen, vom im Verfahrensschritt (8b) ermittelten Brechungsindex (n) abhängigen Nachführweg (233); und
(8d) Aufnehmen und/oder Speichern eines Bildes (225) zur Erzeugung des Bilderstapels (224).

9. Verfahren nach Anspruch 8, wobei der Verfahrensschritt (8c) das Manipulieren des mindestens einen Strahlenganges (8) der zweiten optischen Anordnung (9c) gemäß einer Ausgestaltung des erfindungsgemäßen Verfahrens zum Manipulieren eines Strahlenganges (8) nach einem der Ansprüche 1-4 zum Korrigieren von Abbildungsfehlern der zweiten optischen Anordnung (9c) umfasst.

10. Verfahren nach Anspruch 8 oder 9, umfassend
- das einmalige Durchführen der Verfahrensschritte (8a, (8b) und (8c); und
- das n-malige Wiederholen der Verfahrensschritte (8a), (8b)' und (8c), wobei der Verfahrensschritt (8b)' lediglich den Verfahrensschritt des Einstellens mindestens eines Mikroskopparameters (2) in Abhängigkeit vom ermittelten Brechungsindex (n) zum Manipulieren des Strahlenganges (2) aufweist.

11. Verfahren nach einem der Ansprüche 1 bis 10, wobei das Ermitteln des Brechungsindex (n) der Probe (21) und/oder des im Probenvolumen (17) angeordneten optischen Mediums (35) die folgenden Verfahrensschritte umfasst:
(i) Fokussieren von Messlicht (65) in das Probenvolumen (17) mittels einer optischen Anordnung (9), wobei das Messlicht (65) auf einer Probenseite (15) der optischen Anordnung (9) durch das optische Medium (35) und ein weiteres optisches Medium (9) transmittiert wird;
(ii) Detektieren des von einem reflektiven Element (49) reflektierten und durch eine weitere optische Anordnung oder durch die optische Anordnung transmittierten Messlichts (65b) mit einer Detektoranordnung (57) oder mit einem ortsauflösenden Detektor (58);
(iii) Ermitteln eines Arbeitsabstandes (79) zwischen der optischen Anordnung (9) und dem reflektiven Element (49) basierend auf dem vom Detektor (63) detektierten Messlicht (65), wobei für den Arbeitsabstand (79) der Fokus (19) des Messlichts (65) auf dem reflektiven Element (49) liegt;
(iv) Variieren mindestens eines der folgenden Parameter:
(iv.1) Abstand zwischen der optischen Anordnung und dem Probenmedium (117);
(iv.2) Abstand zwischen Reflektor und dem weiteren optischen Medium (113);
(iv.3) Divergenz des Messlichts (65),
wobei das Variieren zu einer festgelegten Abstandsänderung (121) einer Fokuslage (123) des Messlichts (65) führt;
(v) Ermitteln eines weiteren Arbeitsabstandes (127) gemäß den Verfahrensschritten (i) bis (iii);
(vi) Ermitteln einer Arbeitsabstandsänderung (129) zwischen dem Arbeitsabstand (79) und dem weiteren Arbeitsabstand (127); und
(vii) Ermitteln der Brechzahl (n) basierend auf der Abstandsänderung (121) und der Arbeitsabstandsänderung (129).

12. Verfahren nach einem der Ansprüche 1 bis 11, wobei das Ermitteln des Brechungsindex (n) einer Probe (21) und/oder eines in einem Probenvolumen (17) angeordneten optischen Mediums (35) ferner die folgenden Verfahrensschritte umfasst:
(I) schräges Einstrahlen von Messlicht (65) bezüglich der optischen Achse (53) in das Probenvolumen (17) mittels einer optischen Anordnung (9);
(II) Reflektieren des eingestrahlten Lichts (11) an einem im Probenvolumen (17) an einer ersten Position (207) bereitgestellten reflektiven Element (49);
(III) Abbilden des reflektierten Lichts (65b) auf einen ortsauflösenden Detektor (58);
(IV) Auswerten des vom Detektor (58) detektierten Signals hinsichtlich Größe und/oder Versatz des reflektierten Lichts (65 b) auf dem ortsauflösenden Detektor (58);
(V) Verschieben des reflektiven Elements (49) entlang der optischen Achse (53) an eine zweite Position (208) und Durchführen der Verfahrensschritte (III) und (IV); und
(VI) Ermitteln des Brechungsindex (n) basierend auf der Größe und/oder des Versatzes des reflektierten Lichts (65b) für die erste (207) und die zweite Position (208) des reflektiven Elements (49).

13. Verfahren nach einem der Ansprüche 1 bis 12, ferner umfassend das Auslesen von Kalibrationsdaten (188), wobei das Einstellen des mindestens einen Mikroskopparameters (2) in Abhängigkeit vom ermittelten Brechungsindex (n) und/oder in Abhängigkeit von den ausgelesenen Kalibrationsdaten (188) erfolgt.

14. Vorrichtung zur Manipulation mindestens eines Strahlenganges (8) in einem Mikroskop (1), insbesondere in einem Lichtblattmikroskop (5), umfassend:
- ein Brechungsindexermittlungsmodul (56) zum Ermitteln des Brechungsindex (n) einer Probe (21) und/oder des Brechungsindex (n) eines in einem Probenvolumen (17) angeordneten optischen Mediums (35), und
- mindestens einen Strahlengangmanipulator (170) zum Einstellen mindestens eines Mikroskopparameters (2) basierend auf dem ermittelten Brechungsindex (n) zur Manipulation des mindestens einen Strahlengangs (8),
**dadurch gekennzeichnet, dass** der mindestens eine Strahlengangmanipulator (170) mindestens zwei Elemente aus der folgenden Gruppe umfasst:
- ein optisches Element mit elektrisch einstellbarer Brennweite (182);
- ein Aktuatormodul (87) zum Verschieben einer optischen Anordnung (9);
- ein Korrekturring (184);
- ein Korrekturplattenmodul zum Einbringen von Korrekturplatten in den Strahlengang;
- ein deformierbarer Spiegel (172);
- ein mit einem transparenten flüssigen Medium gefülltes Hohlelement mit mindestens einer transparenten Eintritts- und/oder Austrittsfläche, wobei die mindestens eine transparente Eintritts- und/oder Austrittsfläche verformbar ist,
- wobei die verschiedenen Elemente miteinander kombiniert sind.

15. Nichtflüchtiges computerlesbares Speichermedium (163) umfassend ein Programm, das Befehle umfasst, die bei der Ausführung des Programms durch einen Computer bewirken, dass der Computer die Vorrichtung nach Anspruch 14 steuert, das Verfahren nach einem der Ansprüche 1 bis 13 auszuführen.

## Claims

1. Method for manipulating at least one beam path (8) in a microscope (1), in particular in a light-sheet microscope (5), comprising the following method steps:
- determining the refractive index (n) of a sample (21) arranged in a sample volume (17) and/or of an optical medium (35) arranged in a sample volume (17); and
- setting at least one microscope parameter (2) as a function of the determined refractive index (n) for manipulating the beam path (8) by means of at least one beam path manipulator (170),
**characterised in that** the at least one beam path manipulator (170) comprises at least two elements from the following group:
- an optical element having an electrically settable focal length (182);
- an actuator module (87) for displacing an optical arrangement (9);
- a correction ring (184);
- a correction plate module for introducing correction plates into the beam path;
- a deformable mirror (172);
- a hollow element filled with a transparent liquid medium with at least one transparent entrance and/or exit surface, wherein the at least one transparent entrance and/or exit surface is deformable,
- wherein the various elements are combined with one another.

2. Method according to claim 1, wherein a focus position is set as a function of the determined refractive index (n) with at least one of the following method steps:
- changing the effective focal length of at least one optical arrangement (9); or
- displacing at least one optical arrangement (9) along its respective optical axis (53).

3. The method according to claim 1 or 2, wherein the method comprises the following method steps:
- displacing a sample (21), wherein during this displacement an interface (235) between the immersion medium (23), in which the sample (21) is embedded, and the medium (39) present in front of the illumination objective (7), for example, air, is displaced; and
- setting at least one microscope parameter (2) as a function of the determined refractive index (n) for manipulating the beam path (8).

4. Method according to claim 1, wherein changing the optical path length (176) comprises displacing at least one reflective mirror section (178, 180) and/or displacing an interface of a deformable transmissive medium.

5. Method according to claim 4, wherein changing the optical path length (176) takes place substantially in accordance with a superposition of the functional relationships r2 and r4 with in each case fixed weighting of r2 and r4, wherein r corresponds to the distance from the optical axis (53).

6. Method according to one of claims 1 to 5, wherein the method manipulates the beam path (8) in a wavelength-dependent manner by the following method steps:
(A) manipulating the beam path (8) of light (11) of a first wavelength according to a method according to one of claims 1 to 3; and
(B) setting at least one further wavelength.

7. Method for recording image stacks (224) in a microscope (1), in particular in a light-sheet microscope (5), wherein the method comprises the following method steps:
- carrying out the method for manipulating at least one beam path according to one of claims 1 to 6;
- detecting a change in the position of the sample (21) with respect to the optical arrangement (9) and/or detecting the changes of an excitation wavelength (239) before setting at least one microscope parameter (2); and
- recording and/or storing an image (225) for generating the image stack (224).

8. Method for recording image stacks (224) in a microscope (1), in particular in a light-sheet microscope (5), wherein the method comprises the following method steps:
(8a) displacing a focal plane (19) of a first optical arrangement (9b) by a preset scanning path (229);
(8b) manipulating the at least one beam path (8) of the first optical arrangement (9b) according to one embodiment of the method according to the invention for manipulating a beam path (8) in a microscope (1) for correcting imaging aberrations of the first optical arrangement (9b) according to one of claims 1 to 6;
(8c) displacing or tracking the focal plane (19) of a second optical arrangement (9c) by a tracking path (233) dependent on the refractive index (n) determined in method step (8b); and
(8d) recording and/or storing an image (225) for generating the image stack (224).

9. Method according to claim 8, wherein method step (8c) comprises manipulating the at least one beam path (8) of the second optical arrangement (9c) according to one embodiment of the method according to the invention for manipulating a beam path (8) according to one of claims 1-4 for correcting imaging aberrations of the second optical arrangement (9c).

10. The method according to claim 8 or 9, comprising
- carrying out method steps (8a), (8b) and (8c) once; and
- repeating method steps (8a), (8b)' and (8c) n times, wherein method step (8b)' has only the method step of setting at least one microscope parameter (2) as a function of the determined refractive index (n) for manipulating the beam path (2).

11. Method according to one of claims 1 to 10, wherein determining the refractive index (n) of the sample (21) and/or of the optical medium (35) arranged in the sample volume (17) comprises the following method steps:
(i) focusing measurement light (65) into the sample volume (17) by means of an optical arrangement (9), wherein the measurement light (65) is transmitted on a sample side (15) of the optical arrangement (9) through the optical medium (35) and a further optical medium (9);
(ii) detecting the measurement light (65b) reflected by a reflective element (49) and transmitted through a further optical arrangement or through the optical arrangement with a detector arrangement (57) or with a spatially resolving detector (58);
(iii) determining a working distance (79) between the optical arrangement (9) and the reflective element (49) based on the measurement light (65) detected by the detector (63), wherein for the working distance (79) the focus (19) of the measurement light (65) lies on the reflective element (49);
(iv) varying at least one of the following parameters:
(iv.1) distance between the optical arrangement and the sample medium (117);
(iv.2) distance between the reflector and the further optical medium (113);
(iv.3) divergence of the measurement light (65),
wherein the varying leads to a defined distance change (121) of a focus position (123) of the measurement light (65);
(v) determining a further working distance (127) according to method steps (i) to (iii);
(vi) determining a working distance change (129) between the working distance (79) and the further working distance (127); and
(vii) determining the refractive number (n) based on the distance change (121) and the working distance change (129).

12. Method according to one of claims 1 to 11, wherein determining the refractive index (n) of a sample (21) and/or of an optical medium (35) arranged in a sample volume (17) further comprises the following method steps:
(I) obliquely incidence of measurement light (65) into the sample volume (17) by means of an optical arrangement (9) with respect to the optical axis (53);
(II) reflecting the incident light (11) at a reflective element (49) provided in the sample volume (17) at a first position (207);
(III) imaging the reflected light (65b) onto a spatially resolving detector (58);
(IV) evaluating the signal detected by the detector (58) with regard to size and/or offset of the reflected light (65 b) on the spatially resolving detector (58);
(V) displacing the reflective element (49) along the optical axis (53) to a second position (208) and carrying out method steps (III) and (IV); and
(VI) determining the refractive index (n) based on the size and/or the offset of the reflected light (65b) for the first (207) and the second position (208) of the reflective element (49).

13. Method according to one of claims 1 to 12, further comprising reading out calibration data (188), wherein setting the at least one microscope parameter (2) takes place as a function of the determined refractive index (n) and/or as a function of the readout calibration data (188).

14. Device for manipulation of at least one beam path (8) in a microscope (1), in particular in a light-sheet microscope (5), comprising:
- a refractive-index determination module (56) for determining the refractive index (n) of a sample (21) and/or the refractive index (n) of an optical medium (35) arranged in a sample volume (17), and
- at least one beam path manipulator (170) for setting at least one microscope parameter (2) based on the determined refractive index (n) for manipulation of the at least one beam path (8),
**characterised in that** the at least one beam path manipulator (170) comprises at least two elements from the following group:
- an optical element having an electrically adjustable focal length (182);
- an actuator module (87) for displacing an optical arrangement (9);
- a correction ring (184);
- a correction plate module for introducing correction plates into the beam path;
- a deformable mirror (172);
- a hollow element filled with a transparent liquid medium with at least one transparent entrance and/or exit surface, wherein the at least one transparent entrance and/or exit surface is deformable,
- wherein the various elements are combined with one another.

15. Non-volatile computer-readable storage medium (163) comprising a program that comprises instructions which, when the program is executed by a computer, cause the computer to control the device according to claim 14 to carry out the method according to one of claims 1 to 13.

## Revendications

1. Procédé de manipulation d'au moins un trajet de faisceau (8) dans un microscope (1), en particulier dans un microscope à feuille de lumière (5), comprenant les étapes de procédé suivantes :
- détermination de l'indice de réfraction (n) d'un échantillon (21) disposé dans un volume d'échantillon (17) et/ou d'un milieu optique (35) disposé dans un volume d'échantillon (17) ; et
- réglage d'au moins un paramètre du microscope (2) en fonction de l'indice de réfraction (n) déterminé pour manipuler le trajet de faisceau (8) au moyen d'au moins un manipulateur de trajet de faisceau (170),
**caractérisé en ce que** ledit au moins un manipulateur de trajet de faisceau (170) comprend au moins deux éléments du groupe suivant :
- un élément optique avec une focale réglable électriquement (182) ;
- un module actionneur (87) pour déplacer un agencement optique (9) ;
- une bague de correction (184) ;
- un module de plaques de correction pour introduire des plaques de correction dans le trajet de faisceau ;
- un miroir déformable (172) ;
- un élément creux rempli d'un milieu liquide transparent avec au moins une surface d'entrée et/ou de sortie transparente, ladite au moins une surface d'entrée et/ou de sortie transparente étant déformable,
- les différents éléments étant combinés les uns avec les autres.

2. Procédé selon la revendication 1, dans lequel, en fonction de l'indice de réfraction (n) déterminé, une position focale est réglée avec au moins l'une des étapes de procédé suivantes :
- modification de la distance focale effective d'au moins un agencement optique (9) ; ou
- déplacement d'au moins un agencement optique (9) le long de son axe optique (53) respectif.

3. Procédé selon la revendication 1 ou la revendication 2, dans lequel le procédé comprend les étapes de procédé suivantes :
- déplacement d'un échantillon (21), dans lequel, lors de ce déplacement, une interface (235) entre le milieu d'immersion (23), dans lequel l'échantillon (21) est intégré, et le milieu (39) présent devant l'objectif d'éclairage (7), par exemple de l'air, est déplacée ; et
- réglage d'au moins un paramètre du microscope (2) en fonction de l'indice de réfraction (n) déterminé pour manipuler le trajet de faisceau (8).

4. Procédé selon la revendication 1, dans lequel la modification de la longueur de trajet optique (176) comprend un déplacement d'au moins une section de miroir réfléchissante (178, 180) et/ou le déplacement d'une interface d'un milieu transmissif déformable.

5. Procédé selon la revendication 4, dans lequel la modification de la longueur de trajet optique (176) s'effectue essentiellement conformément à une superposition des relations fonctionnelles r2 et r4 avec, à chaque fois, une pondération fixée de r2 et de r4, r correspondant à la distance par rapport à l'axe optique (53).

6. Procédé selon l'une des revendications 1 à 5, dans lequel le procédé manipule le trajet de faisceau (8) en fonction de la longueur d'onde au moyen des étapes de procédé suivantes :
(A)manipulation du trajet de faisceau (8) de lumière (11) d'une première longueur d'onde selon un procédé selon l'une des revendications 1 à 3 ; et
(B)réglage d'au moins une autre longueur d'onde.

7. Procédé pour l'enregistrement de piles d'images (224) dans un microscope (1), en particulier dans un microscope à feuille de lumière (5), dans lequel le procédé comprend les étapes de procédé suivantes :
- Exécution du procédé de manipulation d'au moins un trajet de faisceau selon l'une des revendications 1 à 6 ;
- détection d'une modification de la position de l'échantillon (21) par rapport à l'agencement optique (9) et/ou détection des modifications d'une longueur d'onde d'excitation (239) avant le réglage d'au moins un paramètre du microscope (2) ; et
- prise et/ou stockage d'une image (225) pour produire la pile d'images (224).

8. Procédé pour l'enregistrement de piles d'images (224) dans un microscope (1), en particulier dans un microscope à feuille de lumière (5), dans lequel le procédé comprend les étapes de procédé suivantes :
(8a)déplacement d'un plan focal (19) d'un premier agencement optique (9b) d'une course de balayage (229) prédéfinie ;
(8b)manipulation dudit au moins un trajet de faisceau (8) du premier agencement optique (9b) selon un mode de réalisation du procédé selon l'invention de manipulation d'un trajet de faisceau (8) dans un microscope (1) pour corriger des aberrations d'imagerie du premier agencement optique (9b) selon l'une des revendications 1 à 6 ;
(8c)déplacement ou suivi du plan focal (19) d'un deuxième agencement optique (9c) d'une course de suivi (233) dépendant de l'indice de réfraction (n) déterminé à l'étape de procédé (8b) ; et
(8d)prise et/ou stockage d'une image (225) pour produire la pile d'images (224).

9. Procédé selon la revendication 8, dans lequel l'étape de procédé (8c) comprend la manipulation dudit au moins un trajet de faisceau (8) du deuxième agencement optique (9c) selon un mode de réalisation du procédé selon l'invention de manipulation d'un trajet de faisceau (8) selon l'une des revendications 1-4 pour corriger des aberrations d'imagerie du deuxième agencement optique (9c).

10. Procédé selon la revendication 8 ou la revendication 9, comprenant
- la mise en œuvre unique des étapes de procédé (8a), (8b) et (8c) ; et
- la répétition n fois des étapes de procédé (8a), (8b)' et (8c), l'étape de procédé (8b)' comportant uniquement l'étape de procédé du réglage d'au moins un paramètre du microscope (2) en fonction de l'indice de réfraction (n) déterminé pour manipuler le trajet de faisceau (2).

11. Procédé selon l'une des revendications 1 à 10, dans lequel la détermination de l'indice de réfraction (n) de l'échantillon (21) et/ou du milieu optique (35) disposé dans le volume d'échantillon (17) comprend les étapes de procédé suivantes :
(i) focalisation de lumière de mesure (65) dans le volume d'échantillon (17) au moyen d'un agencement optique (9), dans lequel la lumière de mesure (65) est transmise, sur un côté échantillon (15) de l'agencement optique (9), à travers le milieu optique (35) et un autre milieu optique (9) ;
(ii) détection de la lumière de mesure (65b) réfléchie par un élément réfléchissant (49) et transmise à travers un autre agencement optique ou à travers l'agencement optique, au moyen d'un ensemble détecteur (57) ou d'un détecteur (58) à résolution spatiale ;
(iii) détermination d'une distance de travail (79) entre l'agencement optique (9) et l'élément réfléchissant (49) sur la base de la lumière de mesure (65) détectée par le détecteur (63), dans lequel, pour la distance de travail (79), le foyer (19) de la lumière de mesure (65) est situé sur l'élément réfléchissant (49) ;
(iv) variation d'au moins l'un des paramètres suivants :
(iv.1)distance entre l'agencement optique et le milieu d'échantillon (117) ;
(iv.2)distance entre le réflecteur et l'autre milieu optique (113) ;
(iv.3)divergence de la lumière de mesure (65),
dans lequel la variation conduit à une modification de distance (121) fixée d'une position focale (123) de la lumière de mesure (65) ;
(v) détermination d'une autre distance de travail (127) selon les étapes de procédé (i) à (iii) ;
(vi) détermination d'une modification de la distance de travail (129) entre la distance de travail (79) et l'autre distance de travail (127) ; et
(vii) détermination de l'indice de réfraction (n) sur la base de la modification de distance (121) et de la modification de la distance de travail (129).

12. Procédé selon l'une des revendications 1 à 11, dans lequel la détermination de l'indice de réfraction (n) d'un échantillon (21) et/ou d'un milieu optique (35) disposé dans un volume d'échantillon (17) comprend en outre les étapes de procédé suivantes :
(I) irradiation oblique de lumière de mesure (65) par rapport à l'axe optique (53) dans le volume d'échantillon (17) au moyen d'un agencement optique (9) ;
(II) réflexion de la lumière irradiée (11) sur un élément réfléchissant (49) mis à disposition dans le volume d'échantillon (17) à une première position (207) ;
(III) formation d'image de la lumière réfléchie (65b) sur un détecteur (58) à résolution spatiale ;
(IV) évaluation du signal détecté par le détecteur (58) en ce qui concerne la taille et/ou le décalage de la lumière réfléchie (65 b) sur le détecteur (58) à résolution spatiale ;
(V) déplacement de l'élément réfléchissant (49) le long de l'axe optique (53) vers une deuxième position (208) et mise en œuvre des étapes de procédé (III) et (IV) ; et
(VI) détermination de l'indice de réfraction (n) sur la base de la taille et/ou du décalage de la lumière réfléchie (65b) pour la première (207) et la deuxième position (208) de l'élément réfléchissant (49).

13. Procédé selon l'une des revendications 1 à 12, comprenant en outre la lecture de données d'étalonnage (188), dans lequel le réglage dudit au moins un paramètre du microscope (2) est effectué en fonction de l'indice de réfraction (n) déterminé et/ou en fonction des données d'étalonnage (188) lues.

14. Appareil de manipulation d'au moins un trajet de faisceau (8) dans un microscope (1), en particulier dans un microscope à feuille de lumière (5), comprenant :
- un module de détermination de l'indice de réfraction (56) pour déterminer l'indice de réfraction (n) d'un échantillon (21) et/ou l'indice de réfraction (n) d'un milieu optique (35) disposé dans un volume d'échantillon (17), et
- au moins un manipulateur de trajet de faisceau (170) pour régler au moins un paramètre du microscope (2) sur la base de l'indice de réfraction (n) déterminé pour la manipulation dudit au moins un trajet de faisceau (8),
**caractérisé en ce que** ledit au moins un manipulateur de trajet de faisceau (170) comprend au moins deux éléments du groupe suivant :
- un élément optique avec une focale réglable électriquement (182) ;
- un module actionneur (87) pour déplacer un agencement optique (9) ;
- une bague de correction (184) ;
- un module de plaques de correction pour introduire des plaques de correction dans le trajet de faisceau ;
- un miroir déformable (172) ;
- un élément creux rempli d'un milieu liquide transparent avec au moins une surface d'entrée et/ou de sortie transparente, dans lequel ladite au moins une surface d'entrée et/ou de sortie transparente est déformable,
- dans lequel les différents éléments sont combinés les uns avec les autres.

15. Support de stockage non volatil lisible par ordinateur (163) comprenant un programme qui comprend des instructions qui, lors de l'exécution du programme par un ordinateur, amènent l'ordinateur à commander l'appareil selon la revendication 14 pour exécuter le procédé selon l'une des revendications 1 à 13.
